(19) Europäisches Patentamt
European Patent Office
Office européen des brevets

(11) **EP 4 736 971 A1**

(12) **EUROPEAN PATENT APPLICATION**

(43) Date of publication:
06.05.2026 Bulletin 2026/19

(21) Application number: 25211942.5

(22) Date of filing: 29.10.2025

(51) International Patent Classification (IPC):
A63F 13/24 (2014.01)     A63F 13/285 (2014.01)
G06F 3/01 (2006.01)

(52) Cooperative Patent Classification (CPC):
A63F 13/24; A63F 13/285; G06F 3/016

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.10.2024 JP 2024192054

(71) Applicant: Minebea Mitsumi Inc.
Kitasaku-gun, Nagano 3890293 (JP)

(72) Inventors:
• GOMI, Yoshihiro
Tama-shi, 206-8567 (JP)
• Takanori, KATO
Tama-shi, 206-8567 (JP)
• IRIE, Takahiko
Tama-shi, 206-8567 (JP)
• TAKAHASHI, Yuki
Tama-shi, 206-8567 (JP)
• KITAMURA, Yasutaka
Tama-shi, 206-8567 (JP)

(74) Representative: Epping - Hermann - Fischer
Patentanwaltsgesellschaft mbH
Schloßschmidstraße 5
80639 München (DE)

(54) **OPERATION INPUT APPARATUS**

(57) An operation input apparatus (1) includes a plurality of operation panel portions (450) disposed to be flush with each other, each of the plurality of operation panel portions (450) being displaceable by an operation of a user; and an actuator (10) including a movable portion (20) connected to the operation panel portion (450), the actuator (10) performing, by electromagnetic driving, a first operation of the movable portion (20) to apply an operation feeling to the user in accordance with a displacement of the operation panel portion (450) and a second operation of the movable portion (20) to present an operation position (450) of the operation panel portion to the user or to prompt the user to operate the operation panel portion (450).

1

FIG. 4

EP 4 736 971 A1

## Description

Technical Field

The present invention relates to an operation input apparatus.

Background Art

A game controller has been widely used as an input device for a home video game apparatus.

Such a game controller generally includes, for example, as an operation portion operated by a user (player), a stick in an upright state that can be tilted, a directional key, and various buttons, as described in Patent Literature (hereinafter referred to as PTL) 1. The user can perform a desired operation input via the game controller by tilting the stick or appropriately pressing a key or button. The input can be adjusted according to the angle at which the stick is tilted (such as the amount of movement) by the user varying the force applied.

Further, the game controller is equipped with an actuator that vibrates in response to stick or button operations, and the vibration of the actuator provides the user with a sense of operation through the game controller, thereby enhancing a sense of presence and enjoyability of the game.

Citation List

Patent Literature

PTL 1
Japanese Patent No. 5379250

Summary of Invention

Technical Problem

Generally, a stick, a key, a button, or the like in an operation portion of an operation input apparatus, such as a game controller, has a protruding shape and is designed to be easily recognized by a player. In recent years, there has been a demand for an operation input apparatus, such as a game controller, that features a high level of design aesthetics while a protrusion of an operation portion does not interfere when not in use.

An object of the present invention is to provide an operation input apparatus that has high design aesthetics and enables a thin profile.

Solution to Problem

To achieve the object, the present invention includes: a plurality of operation panel portions disposed to be flush with each other, each of the plurality of operation panel portions being displaceable by an operation of a user; and an actuator including a movable portion connected to the operation panel portion, the actuator performing, by electromagnetic driving, a first operation of the movable portion to apply an operation feeling to the user in accordance with a displacement of the operation panel portion and a second operation of the movable portion to present an operation position of the operation panel portion to the user or to prompt the user to operate the operation panel portion.

Advantageous Effects of Invention

According to the present invention, it is possible to achieve high design aesthetics and a thin profile.

Brief Description of Drawings

FIG. 1 is an external perspective view of an operation input apparatus according to an embodiment of the present invention;
FIG. 2 is a partial sectional view taken along line A-A in FIG. 1;
FIG. 3 is an external perspective view of the operation input apparatus according to an embodiment of the present invention in which an operation panel portion is displaced;

FIG. 4 is a partial sectional view taken along line B-B in FIG. 3;

FIG. 5 is an exploded perspective view of the operation input apparatus according to an embodiment of the present invention;

FIG. 6 is a perspective view of a back side of an upper case illustrating a structure of the operation panel portion;

FIGS. 7A and 7B are partial sectional views illustrating a connection relationship between an operation panel portion to which a cap portion is attached and an output shaft portion;

FIG. 8 is a partial sectional view illustrating a movement range of the operation panel portion at the vibration actuator;

FIG. 9 is a partial sectional view illustrating a movement range of a panel portion at the vibration actuator that does not include a sliding member;

FIG. 10 is a partially enlarged sectional view illustrating Variation 1 of a connecting portion;

FIG. 11 is a diagram illustrating the displacement of the operation panel portion in a reference example and an embodiment of the present invention;

FIG. 12 is an external perspective view of an actuator of the operation input apparatus according to an embodiment of the present invention;

FIG. 13 is a longitudinal sectional view illustrating a configuration of a principal part of the actuator;

FIG. 14 is a diagram illustrating an internal structure of the actuator with a case removed;

FIG. 15 is an exploded perspective view of the actuator;

FIG. 16 is a perspective view of movable portion;

FIG. 17 is a diagram for describing an operation of the actuator according to an embodiment of the present invention;

FIGS. 18A and 18B are diagrams for describing sensing of a magnetic sensor;

FIG. 19 is a diagram schematically illustrating a configuration of a principal part of the operation input apparatus according to an embodiment of the present invention;

FIG. 20 is a diagram schematically illustrating a configuration of a principal part of a variation of the operation input apparatus according to an embodiment of the present invention;

FIG. 21 is a diagram for describing an operation of the operation input apparatus;

FIGS. 22A, 22B, and 22C are diagrams illustrating an exemplary operation pattern of the actuator;

FIGS. 23A, 23B, 23C, 23D, 23E, and 23F are diagrams illustrating exemplary operation patterns of the operation input apparatus;

FIG. 24 is an external perspective view of Variation 1 of the operation input apparatus according to an embodiment of the present invention;

FIG. 25 is a sectional view taken along line C-C of FIG. 24;

FIG. 26 is an external perspective view illustrating the operation input apparatus of Variation 1 in which an operation panel portion is displaced;

FIG. 27 is a partial sectional view taken along line C-C in FIG. 26; and

FIG. 28 is an exploded perspective view of Variation 1 of the operation input apparatus.

Description of Embodiments

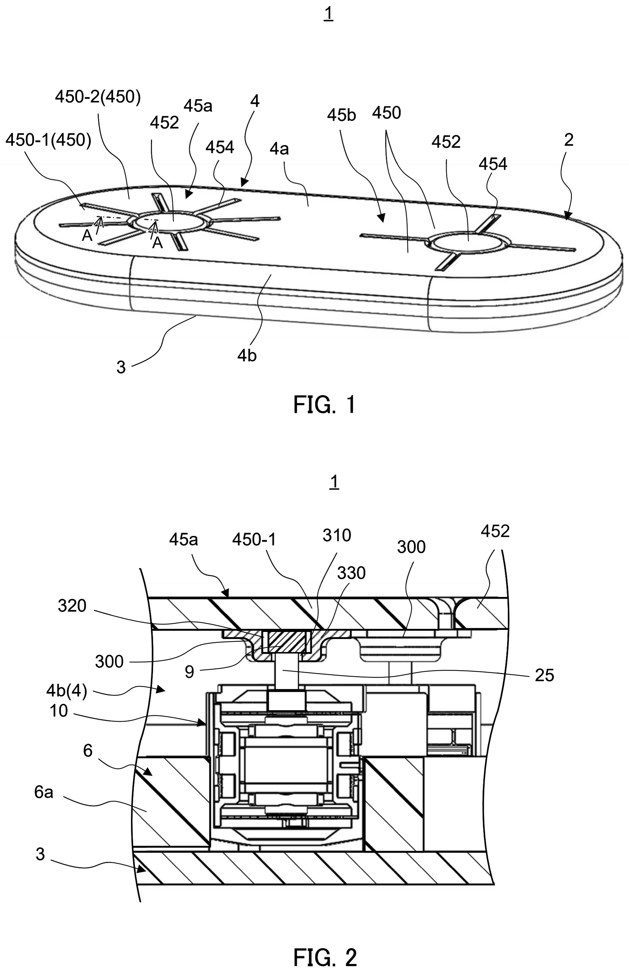

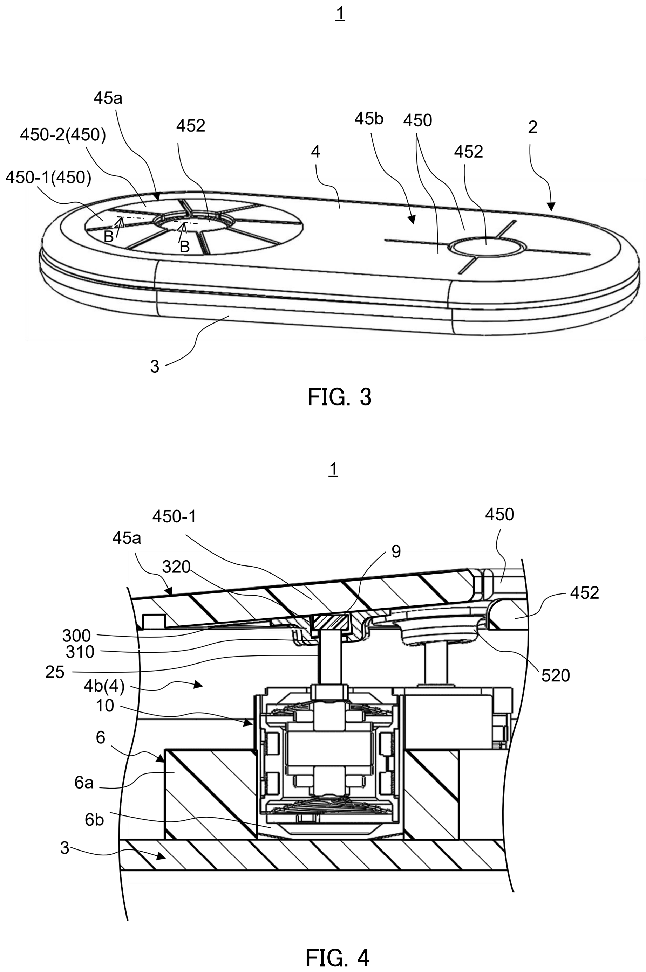

Hereinafter, the present embodiment will be described in detail with reference to the drawings. The same reference numerals will be assigned to common components in each figure, and description thereof will be omitted as appropriate. FIG. 1 is an external perspective view of an operation input apparatus according to an embodiment of the present invention, and FIG. 2 is a partial sectional view taken along line A-A in FIG. 1. FIG. 3 is an external perspective view of the operation input apparatus according to an embodiment of the present invention in which an operation panel portion is displaced, and FIG. 4 is a partial sectional view taken along line B-B in FIG. 3.

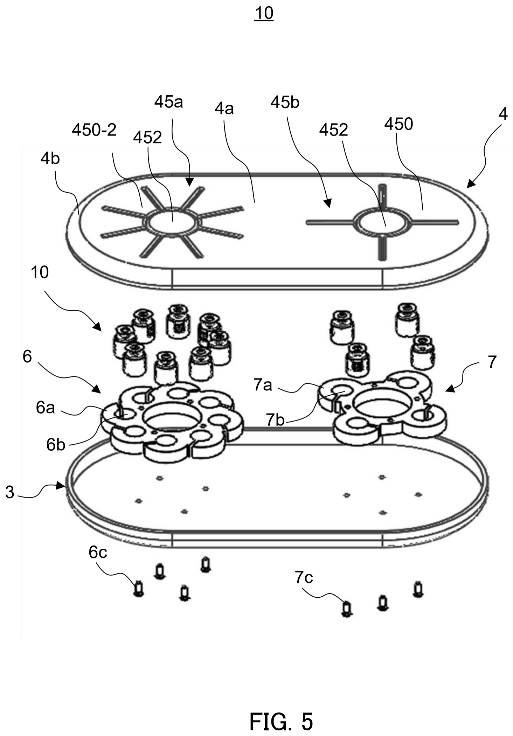

In addition, FIG. 5 is an exploded perspective view of the operation input apparatus according to an embodiment of the present invention. Note that, in the present embodiment, expressions related to directions, such as up, down, left, right, front, and rear, used for describing configurations and operations of the respective parts of the operation input apparatus are relative ones, not absolute ones. These expressions are appropriate in a case where an attitude of an operation surface is as illustrated in the figure, but in a case where the attitude is changed, the expressions should be changed and interpreted in accordance with the change in attitude.

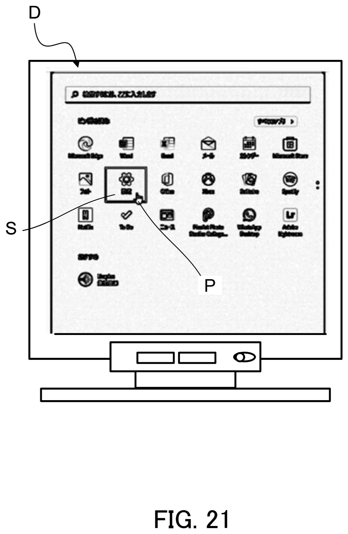

Operation input apparatus 1 is used as a controller, for example, by being connected to a personal computer or a game apparatus. Operation input apparatus 1 moves, for example, pointer P or a selection frame between selection icons S displayed on screen D of a display (see FIG. 21) connected to operation input apparatus 1 through operation portions 45a and 45b operated by a touch or press of a user.

The user can select a plurality of icons on the screen by this pointer operation. Further, operation input apparatus 1 may have a function of providing the user with a haptic sensation as an operation feeling, including vibration, reaction force, thrust, displacement, and the like, and a function of presenting a position of the operation portion by an operation and detecting a displacement of a position related to the operation portion.

Operation portions 45a and 45b of operation input apparatus 1 include a plurality of operation panel portions (operation surface portion) 450. Operation panel portions 450 are displaceable such that each of the operation panel portions is tilted by a user's operation. Operation input apparatus 1 presents the operation position of operation panel portion 450 or prompts the operation of operation panel portion 450 in response to the operation of operation panel portion 450.

In operation input apparatus 1, by moving a plurality of operation panel portions 450, it is possible to recognize operation portions 45a and 45b, and by the user directly operating operation portions 45a and 45b, it is possible to detect the input by the operation and to provide the haptic sensation of the operation.

Note that, in a case where the user intends to operate the operation portion, operation input apparatus 1 may make the operation portion movable by observing, recognizing, and determining a situation of the user.

As a result, it is possible to allow recognition of the position of the operation portion or recognition of the movement of the operation portion. In particular, operation input apparatus 1 can drive the operation part operated by the user to prompt the operation on the operation portion such that the user actively acts.

As illustrated in FIGS. 1 to 5, operation input apparatus 1 includes hollow housing 2, a plurality of operation panel portions 450 (450-1, 450-2) that are disposed to be flush with a surface of housing 2 and are displaceable to be tilted, and actuator 10.

As illustrated in FIGS. 1 to 4, operation portions 45a and 45b are disposed such that central panel portions 452 and a plurality of operation panel portions 450 are flush with each other. Thus, operation input apparatus 1 has a seamless shape without any unevenness on the operation surface, and is configured as an input apparatus with high design aesthetics.

In operation panel portion 450, the distal end side, which is the end portion on the central side of each of operation portions 45a and 45b, is capable of popping up and down by actuator 10. Operation panel portion 450 is displaced to be tilted.

Note that, although a plurality of operation portions 45a and 45b are provided in housing 2, one operation portion 45a may be provided, or three or more operation portions may be provided, as long as the configuration includes a plurality of operation panel portions 450.

<Housing 2>

Housing 2 is formed in a flat plate shape including, for example, a hollow elliptical plate shape, and includes lower case (first case) 3 and upper case (second case) 4. Lower case 3 is a box-shaped body that opens upward, and upper case 4, which is a box-shaped body with open bottom and designed to cover lower case 3 from above, is attached to lower case 3.

Upper case 4 is formed of a material having flexibility. Operation portions 45a and 45b are provided on a part of the surface of upper case 4. Operation panel portions 450 of operation portions 45a and 45b are disposed on surface portion 4a of upper case 4 to be flush with the surface when they are not driven.

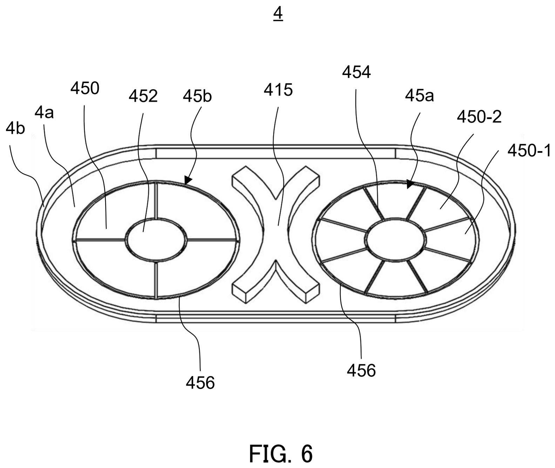

FIG. 6 is a perspective view of the back side of the upper case illustrating a structure of the operation portion. Upper case 4 is provided with circumferential wall portion 4b that is suspended from the periphery of surface portion 4a having an elliptical plate shape, and rib 415 that surrounds each of operation portions 45a and 45b together with the circumferential wall portion is provided in a central part of the back surface of upper case 4.

As illustrated in FIGS. 1, 3, 5, and 6, operation portions 45a and 45b are arranged side by side in a longitudinal direction of housing 2.

Operation portions 45a and 45b include, for example, a plurality of operation panel portions 450 in a circular region. Operation panel portion 450 is a plate-shaped body, and is configured by forming notch portion 454 and groove portion 456, which has a circular cutout shape, on a top plate that constitutes the surface of upper case 4.

As illustrated in FIG. 6, operation panel portions 450 are partitioned by a plurality of notch portions 454 formed radially around circular central panel portion 452. The plurality of operation panel portions 450 are arranged to surround the outer periphery of central panel portion 452 via notch portions 454.

The periphery of central panel portion 452 and notch portions 454 are provided to penetrate the surface of upper case 4. Groove portion 456 is formed in a groove shape with a bottom surface on the back surface of upper case 4.

The formed part of groove portion 456 is a thin portion of the surfaces of operation panel portion 450 and upper case 4, and constitutes the base end of operation panel portion 450.

Operation panel portion 450 is disposed on the back surface of upper case 4 extending toward the circular central panel portion 452 side with groove portion 456 as the base end. The distal end of operation panel portion 450 is a free end, and is provided to be capable of swinging with groove portion 456 as the fulcrum.

That is, operation panel portion 450 is in a state of being disposed to be swingable in a cantilever manner centered on the base end (groove portion 456), with the base end as a part of surface portion 4a of upper case 4. The distal end side is connected to a movable portion of actuator 10 via cap portion 300.

**EP 4 736 971 A1**

Operation panel portion 450 is displaced such that the distal end side is tilted with respect to the height of the surface of surface portion 4a of upper case 4 (housing 2). The distal end of operation panel portion 450 is pressed, moved, and tilted upward by output shaft portion (shaft portion) 25 moving up and down due to the driving of actuator 10. This is due to the fact that movable portion 20 is disposed to be movable in a direction orthogonal to surface portion 4a of upper case 4. Note that operation panel portion 450 is preferably configured, on surface portion 4a, in a so-called cantilever shape in which one end serving as the base end is a root and the other end extends from the root to form a free end. Operation panel portion 450 may have a band-shaped body or a polygonal shape.

Since operation panel portion 450 is provided with groove portion 456 particularly on a root side, the stress generated in operation panel portion 450 can be reduced when operation panel portion 450 is operated.

As illustrated in FIGS. 1 and 2, operation panel portion 450 is flush with the surface of surface portion 4a of upper case 4 when it is not driven, and is disposed in a flat surface shape without any unevenness.

Inside housing 2, actuator 10, which is electromagnetically driven, is disposed to displace operation panel portion 450 in the up-down direction, specifically, to displace each of a plurality of operation panel portions 450, which are a part of the surface of upper case 4, from the lower side (the back surface of operation panel portion 450). Housing 2 accommodates a plurality of actuator 10 main bodies.

Lower case 3 has a bottom surface, and actuators 10 are attached to the bottom surface via holders 6 and 7. Each of actuators 10 is disposed to face corresponding operation panel portion 450 disposed above.

Each of holders 6 and 7 fixes actuators 10 corresponding to operation panel portions 450 such that holders 6 and 7 face actuators 10 disposed below operation panel portions 450. Holders 6 and 7 include annular main body portions 6a and 7a, respectively, and annular main body portions 6a and 7a include actuator fixing holes 6b and 7b, respectively, formed continuously in a circumferential direction. Holders 6 and 7 fit actuators 10 into actuator fixing holes 6b and 7b.

Note that, in an embodiment of the present invention, central panel portions 452 are usually fixed to upper case 4 or lower case 3 so as not to operate and kept flush with the surface of surface portion 4a of upper case 4, but the configuration is not limited thereto. For example, actuators 10 for operating central panel portions 452 may be disposed in opening portions, which are below central panel portions 452, in the center of holders 6 and 7. Each of the plurality of actuators 10 includes output shaft portion (protruding portion) 25 that is disposed to protrude upward from a central portion of an upper surface of a fixed body serving as a main body portion and moves in the up-down direction.

The fixed body of actuator 10 is formed in a cylindrical shape, and output shaft portion 25 is connected to operation panel portion 450.

Output shaft portion 25 is disposed to extend vertically with respect to lower case 3. Output shaft portion 25 is disposed to be capable of linearly advancing and retreating toward the back surface of operation panel portion 450 (450-1). Output shaft portion 25 extends in a perpendicular direction (a vertical direction, which is an up-down direction) with respect to the even operation surface of operation panel portion 450 in a non-operated state. Note that details of an example of actuator 10 will be described later.

Cap portion 300 is disposed at the distal end of output shaft portion 25, and output shaft portion 25 is connected to the back surface of operation panel portion 450 via cap portion 300.

Cap portion 300 functions to convert the advance and retreat movement of output shaft portion 25 of actuator 10 in the up-down direction into the displacement movement of operation panel portion 450 in the up-down direction, specifically, into the displacement movement in a tilted manner.

Cap portion 300 displaces operation panel portion 450 (450-1) to be tilted by the movement of sliding member (moving member) 9 provided at the distal end of output shaft portion 25. Note that sliding member 9 is provided at the distal end of output shaft portion 25 and is connected to the back surface of operation panel portion 450 (450-1) via cap portion (connecting portion) 300. Sliding member 9 is movably accommodated in accommodation portion 320 of cap portion 300. Sliding member 9 moves along the back surface of operation panel portion 450 (450-1) when operation panel portion 450 (450-1) is displaced, and output shaft portion 25 advances and retreats following this displacement. Sliding member 9 slides, for example, on the back surface of operation panel portion 450, and the shaft portion linearly advances and retreats following the displacement of operation panel portion 450.

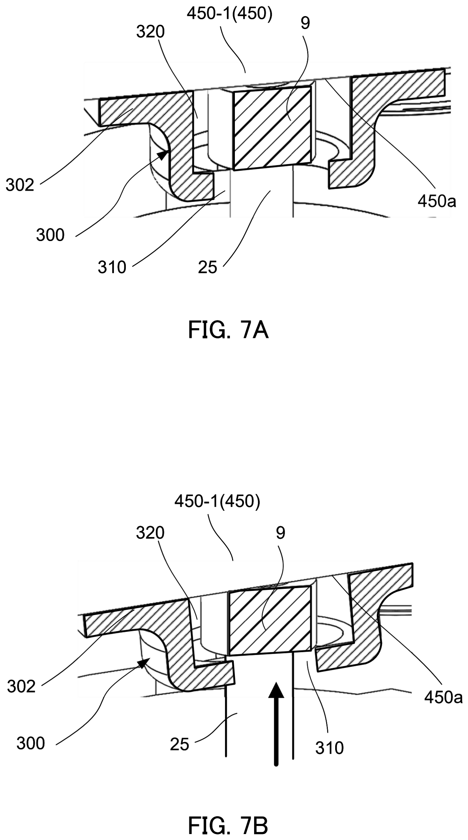

FIGS. 7A and 7B are partial sectional views illustrating a connection relationship between the operation panel portion to which the cap portion is attached and the output shaft portion. FIG. 7A illustrates the relationship between the operation panel portion and the output shaft portion in a normal (default) state where the actuator is not driven, and FIG. 7B illustrates the relationship between the operation panel portion and the output shaft portion in a state where the actuator is driven and the output shaft portion displaces the operation panel portion to be tilted.

As illustrated in FIGS. 2, 4, 7A, and 7B, cap portion 300 is formed in a bottomed cylindrical shape and includes opening portion 310 provided at the bottom part and accommodation portion 320 communicating with opening portion 310. Opening portion 310 is inserted with output shaft portion 25, and accommodation portion 320 accommodates the distal end of the output shaft portion. Attachment portion 330 is provided at the upper end of a peripheral wall portion that surrounds accommodation portion 320. Attachment portion 330 is formed in a flange shape that extends radially outward from the upper end of the peripheral wall portion.

Cap portion 300 is fixed to the back surface of operation panel portion 450 via attachment portion 330. By attachment portion 330 being attached to operation panel portion 450-1 (450), accommodation portion 320 is partitioned on the upper side by the back surface of operation panel portion 450-1 (450). In cap portion 300, the upper portion of sliding member 9 is disposed to face operation panel portion 450-1 (450) in accommodation portion 320, and sliding member 9 can abut operation panel portion 450-1 (450).

Accommodation portion 320 movably accommodates sliding member 9 at the distal end of output shaft portion 25. In accommodation portion 320, the upper portion of sliding member 9 abuts the back surface of operation panel portion 450, allowing sliding member 9 to move.

As illustrated in FIG. 7A, in cap portion 300, sliding member 9 at the distal end of output shaft portion 25 in accommodation portion 320 is movable. In cap portion 300, opening portion 310 has a shape that does not hinder the movement of sliding member 9 at the distal end of output shaft portion 25 when sliding member 9 moves. The diameter of opening portion 310 is larger than the outer diameter of output shaft portion 25, and the inner diameter of accommodation portion 320 is larger than the outer diameter of sliding member 9. Cap portion 300 is in a state of holding sliding member 9 to be movable in the up-down and left-right directions.

In cap portion 300, sliding member 9 in accommodation portion 320 may be configured to be movable in the up-down direction by moving operation panel portion 450-1 by the movement of sliding member 9. Cap portion 300 may hold sliding member 9 movably via output shaft portion 25. With the driving of actuator 10, sliding member 9 moves to press the back surface of operation panel portion 450 in accommodation portion 320 or moves in a direction opposite to the pressing direction to displace operation panel portion 450 to be tilted.

Specifically, as illustrated in FIG. 7B, the driving of actuator 10 causes output shaft portion 25 to extend upward (in a protruding direction of output shaft portion 25) from the upper portion of a case of actuator 10. In accordance with this, sliding member 9 at the distal end of output shaft portion 25 moves upward (in the direction of the black arrow) and presses back surface 450a of operation panel portion 450.

Since operation panel portion 450 is connected to a portion of surface portion 4a of upper case 4 on the base end side as a part of surface portion 4a, operation panel portion 450 is tilted when the distal end side is pressed by sliding member 9. At this time, sliding member 9 moves in the up-down direction and presses cantilevered operation panel portion 450, and thus, operation panel portion 450 is displaced to be tilted. Accordingly, sliding member 9 slides on the back surface of operation panel portion 450 in the pressing direction or in the direction opposite to the pressing direction. At this time, sliding member 9 moves on the back surface to the higher elevation in the gradient direction.

In a case where sliding member 9 is an elastic resin portion made of an elastic resin, interference noise between output shaft portion 25 and the back surface can be prevented by its deformation.

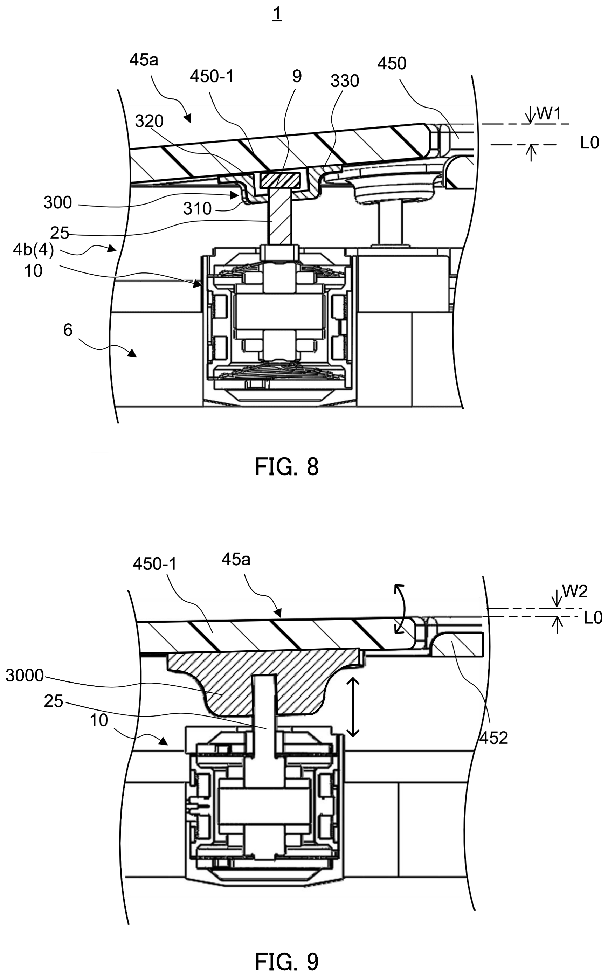

FIG. 8 is a partial sectional view illustrating a movement range of the operation panel portion due to the actuator in the operation input apparatus. As illustrated in FIG. 8, actuator 10 is provided with sliding member (elastic resin) 9 at the distal end of output shaft portion 25 that is inserted through cap portion 300, and sliding member 9 is brought into contact with the back surface of operation panel portion 450 together with cap portion 300.

As illustrated in FIGS. 7B and 8, when output shaft portion 25 rises due to the driving of actuator 10, sliding member 9 in accommodation portion 320 of cap portion 300 moves upward; accordingly, the back surface of operation panel portion 450-1 is pressed upward. Operation panel portion 450-1 is swingably supported in a cantilever manner with groove portion 456 (specifically, the bottom part of groove portion 456) as a fulcrum. Operation panel portion 450-1 is displaced to be tilted by being pressed upward by sliding member 9 on the free end side. At this time, since sliding member 9 is movable up, down, left, and right in accommodation portion 320, sliding member 9 that moves upward comes into contact with the back surface of operation panel portion 450-1 (450) and slides along the back surface.

Further, sliding member 9 slides more smoothly in a case where sliding member 9 is an elastic resin having elasticity, resulting in operation panel portion 450-1 (450) in a tilted posture with the free end side displaced upward with respect to the base end side.

As sliding member 9 moves upward and slides along the back surface of operation panel portion 450, operation panel portion 450 is displaced from initial position L0 in displacement range (displacement width) W1.

Further, when operation panel portion 450 moves downward, sliding member 9 is pressed by operation panel portion 450, slides along the back surface of operation panel portion 450, and causes output shaft portion 25 to be displaced downward. Further, when output shaft portion 25 moves downward in a state where operation panel portion 450 is in the initial position, sliding member 9 may be configured to be locked to the bottom part of cap portion 300 and move downward, and operation panel portion 450 may also be configured to move downward.

Note that the back surface of operation panel portion 450 with which sliding member 9, which is a moving member, comes into contact may be formed of an elastic resin having elasticity.

FIG. 9 is a partial sectional view illustrating a movement range of a panel portion due to a vibration actuator in an operation input apparatus without a sliding member as a reference example. The operation input apparatus illustrated in FIG. 9 has the same configuration as operation input apparatus 1 including actuator 10, except that sliding member 9 is not present and solid cap portion 3000 is provided instead of cap portion 300.

In the reference example of this operation input apparatus, output shaft portion 25 of actuator 10 and operation panel portion 450 are joined in the up-down direction via cap portion 3000. Specifically, solid cap portion 3000 is fixed to the back surface of operation panel portion 450-1, and output shaft portion 25 of vibration actuator 10 is inserted from below cap portion 3000 and is connected to cap portion 3000. Cap portion 3000 moves up and down following the up and down movement of output shaft portion 25, and causes upper operation panel portion 450-1 (450) to move in the up-down direction by its up and down movement.

Operation panel portion 450-1 is supported by the housing in a cantilever manner, with its free end positioned above the actuator. Thus, for each of cap portions 300 and 3000, a direction in which output shaft portion 25 is pressed and a moving direction of operation panel portion 450 are different.

Here, in cap portion 3000, for example, cap portion 3000 moves upward and causes upper operation panel portion 450-1 (450) to move in a tilted direction, thereby displacing operation panel portion 450-1 (450) to be tilted. At this time, the stress generated in cap portion 3000 causes a load to be applied to actuator 10, resulting in limited displacement width W2 of operation panel portion 450.

As described above, displacement width W1 from initial position L0 of operation panel portion 450 in operation input apparatus 1 of the present embodiment is larger than displacement width W2 of the operation input apparatus in the reference example.

In operation input apparatus 1, the upward displacement position of operation panel portion 450 is higher than that in the reference example, thereby enhancing the visibility of operation portions 45a and 45b and clearly presenting the operation positions of the operation portions. In addition, it is possible to provide a user who performs an operation with a more excellent haptic sensation of the operation.

Further, actuator 10 converts the pressing direction of output shaft portion 25 into the moving direction of operation panel portion 450 smoothly by cap portion 300, and thus, output shaft portion 25 does not come off from the cap portion, unlike the reference example of the vibration actuator.

Note that sliding member 9 may be configured in any manner as long as it slides with respect to operation panel portion 450 by the operation of output shaft portion 25. Further, any elastic resin may be provided as sliding member 9, and sliding member 9 may be formed of a material that is easy to slide.

In addition, cap portion 300 may be configured in any manner as long as it can connect operation panel portion 450 and output shaft portion 25. It is preferable that the configuration reduces the load on cap portion 300 and actuator 10 due to the movement of output shaft portion 25 and the movement of operation panel portion 450.

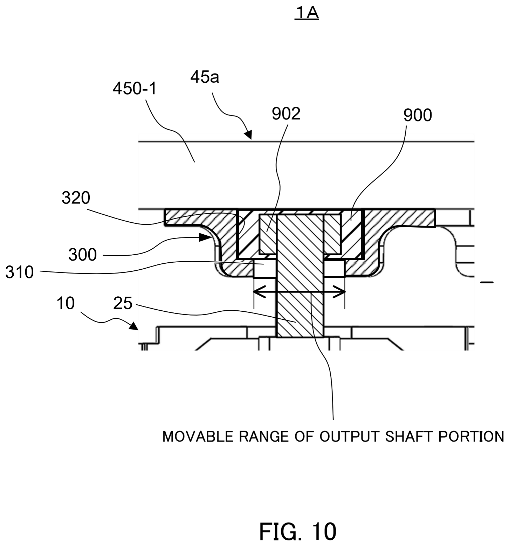

For example, as illustrated in operation input apparatus 1A in FIG. 10, in the configuration of operation input apparatus 1, the sliding member in accommodation portion 320 may be replaced with ring 902 that is externally fitted to the distal end of output shaft portion 25, and elastic member 900 may be disposed between accommodation portion 320 and ring 902.

Elastic member 900 is configured to be elastically deformed and contractible, and is disposed surrounding ring 902 in accommodation portion 320 to fill accommodation portion 320. Note that elastic member 900 is disposed between the upper end of ring 902 and the back surface of operation panel portion 450, and between the bottom part and the lower surface of ring 902, and is disposed in a state of covering the outer surface of ring 902.

When output shaft portion 25 advances and retreats in the axial direction and presses operation panel portion 450-1 upward, ring 902 moves in accommodation portion 320 while being surrounded by elastic member 900. This prevents the generation of mutual interference noise between ring 902 and operation panel portion 450-1.

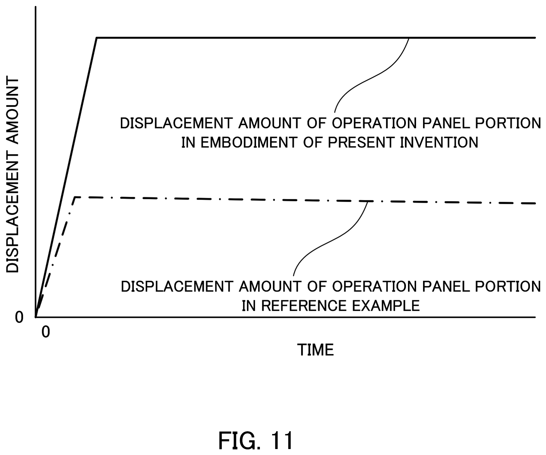

Further, as illustrated in FIG. 11, in the case of an embodiment of the present invention in which sliding member 9 is disposed in accommodation portion 320 of cap portion 300, a displacement amount can be increased compared to the reference example using solid cap portion 3000.

<Overview of Actuator 10>

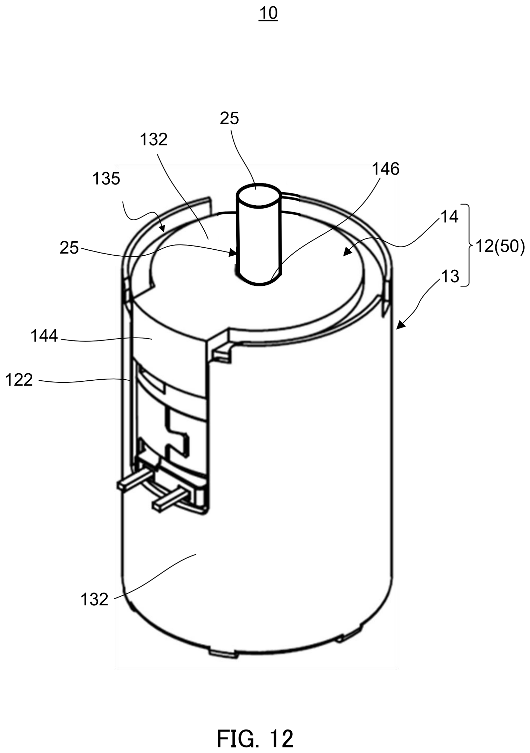

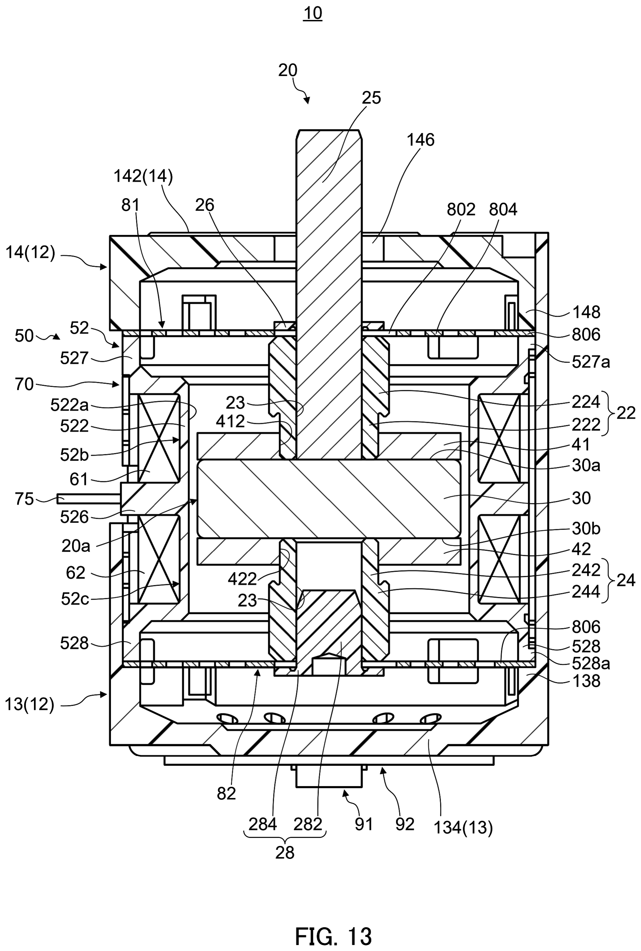

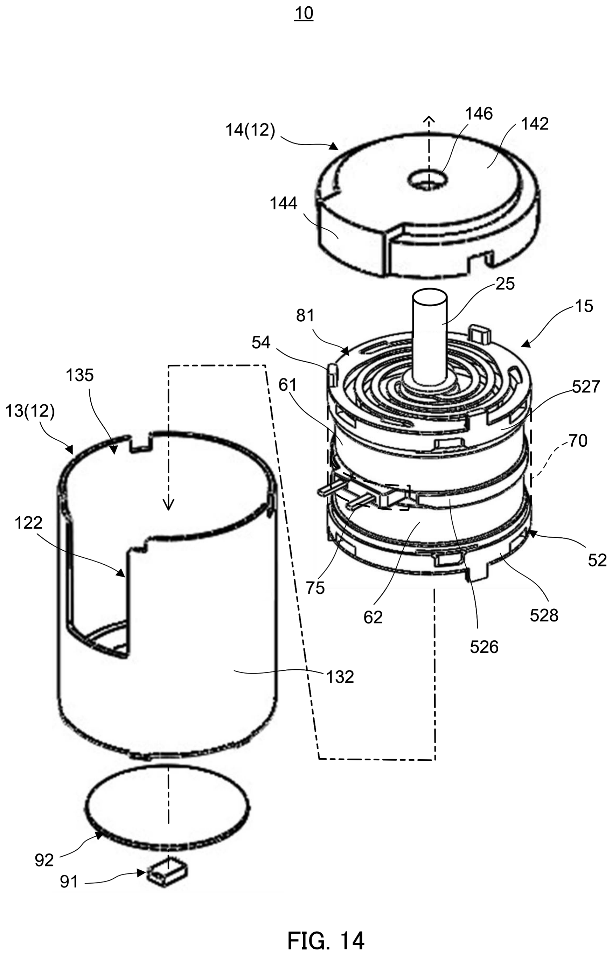

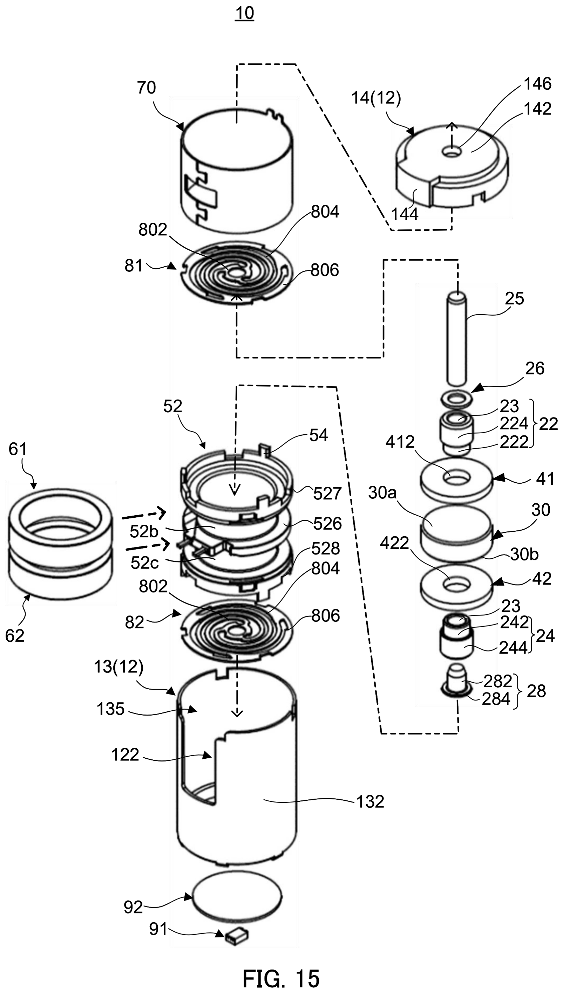

FIG. 12 is an external perspective view of the actuator in the operation input apparatus according to an embodiment of the present invention, and FIG. 13 is a longitudinal sectional view illustrating a configuration of a principal part of the actuator. In addition, FIG. 14 is a diagram illustrating an internal structure of the actuator with a case removed, and FIG. 15 is an exploded perspective view of the actuator.

Actuator 10 includes movable portion 20 that is disposed corresponding to each of operation panel portions 450 of operation portions 45a and 45b and each operation panel portion 450 is connected to. Actuator 10 performs, by electromagnetic driving, an operation (first operation) of movable portion 20 for providing a user with an operation feeling via operation panel portion 450. Further, actuator 10 performs, by electromagnetic driving, an operation (second operation) of movable portion 20 for presenting an operation position of operation panel portion 450 to the user or for prompting the user to operate.

Actuator 10 is, for example, an actuator that presents perception, and is configured to transmit, as the operation feeling (a haptic sensation, a force feeling, or the like) of the user, reciprocating motion of movable portion 20 in response to a touch operation by the user on operation panel portion 450 of operation portions 45a and 45b.

Actuator 10 of the present embodiment is configured to move operation panel portion 450 itself as the operation portion directly connected to the movable portion to indicate the position of operation panel portion 450 and to prompt the operation of operation panel portion 450. Note that, in a case where the movable portion is moved to move operation panel portion 450, the position of operation panel portion 450 may be more reliably indicated to the user by light emission.

Actuator 10 is used as a device that detects an operation and feeds back an operation feeling (haptic sensation). The haptic feedback is to feed back a force feeling or the like in addition to the haptic sensation to the user through operation panel portion 450 operated by the user by means of the actuation, vibration, or the like of movable portion 20. For example, the haptic feedback may also be referred to as haptic sensation feedback, tactile sensation feedback, or force feedback, and is a function used for expressing a haptic sensation and an operation feeling.

As illustrated in FIGS. 12 and 13, actuator 10 accommodates movable portion 20 in hollow case 12 such that the movable portion can reciprocate between upper and lower end surfaces, with an axial direction (up-down direction) of case 12 as a moving direction. Case 12 accommodates movable portion 20 together with coils 61 and 62 such that a protruding end side of output shaft portion 25 protrudes outward. Since actuator 10 is held by holder 6 and fixed to lower case 3 when in use so as to be immovable, case 12 may be regarded as an example of a fixed body. Actuator 10 includes magnetic sensor 91 that detects a movement position of movable portion 20. Actuator 10 is connected to operation panel portion 450 (see FIGS. 1 to 6) using output shaft portion 25 provided in movable portion 20 via cap portion 300, and transmits the movement of the movable portion to operation panel portion 450.

<Configuration of Actuator 10>

Actuator 10 includes magnet 30 in movable portion 20, includes coils 61 and 62 in fixed body 50, and causes movable portion 20 to perform reciprocating motion in a straight line direction by cooperation between energized coils 61 and 62 and magnet 30. Actuator 10 includes elastic supporting parts 81 and 82 that support movable portion 20 to perform reciprocating motion with respect to fixed body 50.

Specifically, actuator 10 includes movable portion 20 including a pair of yokes 41 and 42 and a pair of spring retaining parts 22 and 24 in addition to magnet 30, and fixed body 50 including outer yoke 70 in addition to a pair of annular coils 61 and 62. A pair of elastic supporting parts 81 and 82 are provided between movable portion 20 and fixed body 50.

Movable portion 20 is attached via elastic supporting parts 81 and 82 to fixed body 50 to be movable in a moving direction of the movable portion during application of the operation feeling and in a moving direction of movable portion 20 during presentation of the operation position of operation panel portion 450 or during prompting of the operation of operation panel portion 450.

Note that a configuration in which a pair of yokes 41 and 42, a pair of spring retaining parts 22 and 24, and a pair of coils 61 and 62 are disposed is employed, but the present invention is not limited thereto, and the number of yokes, spring retaining parts, and coils may also be one, three, or more as long as it is possible to achieve movability on one side or both side in a straight line direction.

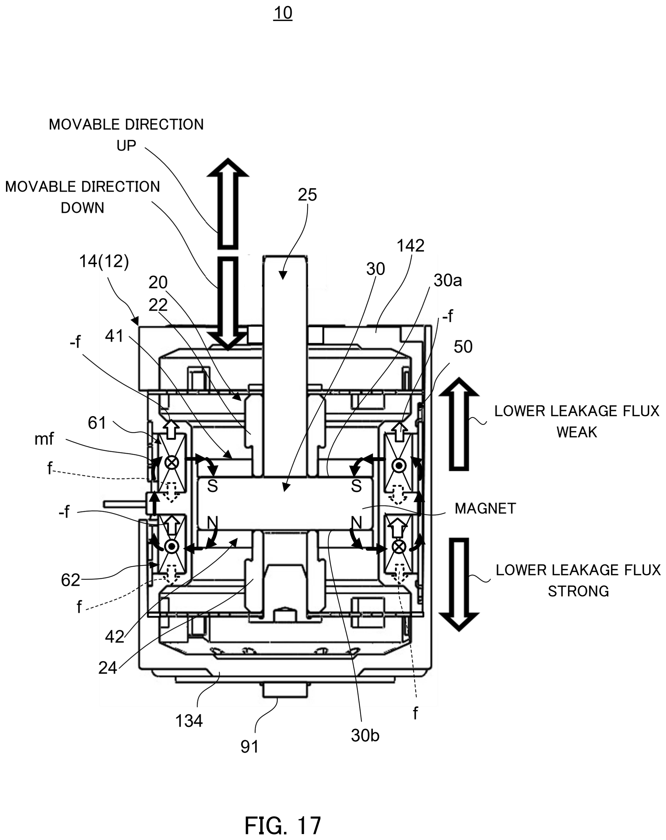

In actuator 10, coils 61 and 62, outer yoke 70, magnet 30, and yokes 41 and 42 constitute a magnetic circuit for moving movable portion 20. In actuator 10, coils 61 and 62 are energized from a power supply section (not illustrated) via terminal part 75, and movable portion 20 is moved accordingly. Movable portion 20 can reciprocate in both directions in the axial direction which is a reciprocation direction, or in one direction which is one side in the axial direction. For example, actuator 10 moves in both directions in the axial direction (see the arrow directions in FIG. 17).

In actuator 10 of the present embodiment, movable portion 20 reciprocates in the moving direction (also referred to as the axial direction of coils 61 and 62) along a holding-portion main body (protective wall portion, cylindrical body) 522 disposed between the coils and movable portion 20 inside coils 61 and 62 held by coil holding part 52. The moving direction is not only the axial direction of coils 61 and 62, but also the magnetization direction of magnet 30, and is also the axial direction of coil holding part 52.

In addition, as illustrated in FIG. 14, actuator 10 may be configured to accommodate unit 15 in which fixed body 50 and movable portion 20 are connected to each other by elastic supporting parts 81 and 82 in case 12 having case main body 13 and lid portion 14. Accordingly, it is possible to accurately assemble main parts of actuator 10 in a different step from case 12.

<Movable Portion 20>

Movable portion 20 in a non-moving state is disposed via elastic supporting parts 81 and 82 such that the center of its length in the reciprocation direction faces, at a predetermined distance in a direction orthogonal to the axial direction of movable portion 20, the center of the length of coil holding part 52 in the reciprocation direction. In the present embodiment, it is preferable that the centers of the lengths in the reciprocation direction of magnet 30 and yokes 41 and 42 are disposed at positions facing, in a direction orthogonal to the reciprocation direction, the center of the length between vertically spaced coils 61 and 62 in the reciprocation direction. Note that magnetic fluid may be interposed between holding-portion main body 522 and movable portion 20.

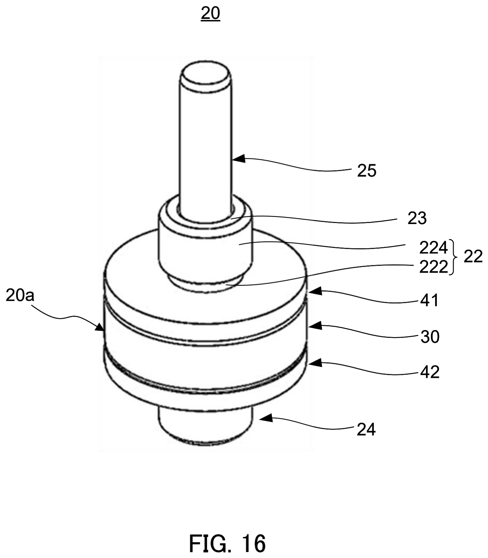

As illustrated in FIGS. 13, 15, and 16, movable portion 20 includes output shaft portion 25, first spring fixation portion 26, and second spring fixation portion 28 in addition to magnet 30, yokes 41 and 42, and spring retaining parts 22 and 24.

In movable portion 20, yokes 41 and 42, spring retaining parts 22 and 24, first spring fixation portion 26, and second spring fixation portion 28 are continuously disposed in opposite directions in the reciprocation direction around magnet 30. Specifically, in movable portion 20, yokes 41 and 42 are disposed on front and back surfaces 30a and 30b of magnet 30 in a stacked manner, and elastic supporting parts 81 and 82 are engaged with one end portions of spring retaining parts 22 and 24 that are, at the other end portions, engaged with opening portions 412 and 422 of yokes 41 and 42.

In movable portion 20, outer circumferential surface 20a of magnet 30 and yokes 41 and 42 face inner circumferential surface 522a of holding-portion main body 522 with a predetermined distance to inner circumferential surface 522a. When movable portion 20 reciprocates, outer circumferential surface 20a reciprocates without coming into contact with inner circumferential surface 522a.

Magnet 30 is solid and magnetized in the reciprocation direction. Specifically, magnet 30 is formed in a disk shape and has front and back surfaces 30a and 30b facing away from each other in the reciprocation direction (thickness direction) as magnetic pole surfaces of different polarities (for example, front surface 30a is an S-pole, and back surface 30b is an N-pole).

Magnet 30 is disposed so as to be spaced apart by a distance from coils 61 and 62 (to be described later in detail) inward of coils 61 and 62 in a radial direction. Here, the "radial direction" is a direction orthogonal to the axes of coils 61 and 62, and is also a direction orthogonal to the reciprocation direction. The "distance" in the radial direction is a distance between coils 61 and 62 including holding-portion main body 522 and magnet 30, and is a distance that allows movement in the reciprocation direction of movable portion 20 without contact between the magnet and the movable portion. In addition, there is a predetermined distance also between holding-portion main body 522 and magnet 30.

In the present embodiment, magnet 30 is disposed such that the center in the width direction of the outer circumferential surface faces the center of holding-portion main body 522 in a direction orthogonal to the axial direction, the outer circumferential surface being situated on the outer side in the radial direction. Note that magnet 30 may have a shape other than a disk shape, such as a cylindrical shape or a plate shape, as long as it is disposed inside coils 61 and 62 with two magnetized surfaces facing in the extending direction of the axes of coils 61 and 62, that is, in the reciprocation direction.

In the present embodiment, magnet 30 is a solid body. Thus, unlike the case of a tubular body, an effort to process an opening portion is saved, and the areas of the front and back surfaces serving as the magnetic pole surfaces are not reduced by formation of the opening portion. In addition, it is desirable that the center of magnet 30 in the axial direction coincide with the center of movable portion 20 in the axial direction.

The magnetization direction of magnet 30 is parallel to the moving direction of movable portion 20.

Yokes 41 and 42 are magnetic materials, and the yokes together with magnet 30 form a movable-portion-side magnetic circuit. Yokes 41 and 42 concentrate the magnetic flux of magnet 30 to allow efficient flow without leakage and effectively distribute the magnetic flux flowing between magnet 30 and coils 61 and 62.

In addition, yokes 41 and 42 have a function of fixing spring retaining parts 22 and 24 in addition to a function as a part of the magnetic circuit. Yokes 41 and 42 may have a function as a main body portion of movable portion 20 and a function as a weight in movable portion 20.

In the present embodiment, yokes 41 and 42 are formed in an annular flat plate shape having the same outer diameter as that of magnet 30. Yokes 41 and 42 are fixed to magnet 30 such that the outer circumferential surfaces thereof are flush with the outer circumferential surface of the magnet, and form outer circumferential surface 20a of movable portion 20 together with the outer circumferential surface of the magnet.

Yokes 41 and 42 are members with the same shape disposed to sandwich magnet 30 with magnet 30 interposed therebetween, but may be members with different shapes. Yokes 41 and 42 are attached to magnet 30 by being attracted to magnet 30, and are also fixed to magnet 30 via, for example, a thermosetting adhesive such as an epoxy resin or an anaerobic adhesive.

Opening portions 412 and 422 are formed in respective central portions of yokes 41 and 42 so as to extend therethrough in the axial direction, that is, in the thickness direction. One end portions of upper and lower spring retaining parts 22 and 24 are internally fitted and fixed to opening portions 412 and 422, respectively.

Opening portions 412 and 422 support spring retaining parts 22 and 24 such that the respective axes of spring retaining parts 22 and 24 (here coinciding with the centers of elastic supporting parts 81 and 82) are located on the central axis of movable portion 20. Opening portions 412 and 422 allow adjustment of the degree of opening in yokes 41 and 42 to adjust the weight of movable portion 20 and set a suitable reciprocating output.

In the present embodiment, when movable portion 20 is not reciprocating, yokes 41 and 42 are positioned on the inner side (radially inner side) of coils 61 and 62 so as to face coils 61 and 62, respectively, in a direction orthogonal to the axial direction of coils 61 and 62.

In yokes 41 and 42, the height position of the upper surface of yoke 41 on the upper side (front side) of magnet 30 is preferably opposed to the position of the center of the upper coil 61 in the height direction (reciprocation direction). In addition, the height position of the lower surface of yoke 42 on the lower side (back surface side) of magnet 30 is preferably opposed to the position of the center of lower coil 62 in the height direction (reciprocation direction).

Spring retaining parts 22 and 24 have a function of fixing the movable-portion-side magnetic circuit to elastic supporting parts 81 and 82, and have a function as a weight of movable portion 20. Spring retaining parts 22 and 24 are disposed symmetrically in the axial direction to sandwich magnet 30 and yokes 41 and 42, and increase the reciprocating output of movable portion 20 driven by power supply to the coil.

In the present embodiment, spring retaining parts 22 and 24 are formed in the same shape. For this reason, the details of spring retaining part 24 are omitted, and the explanation thereof is given by adding the reference numeral of spring retaining part 24 to the corresponding names in the description of spring retaining part 22. Since spring retaining parts 22 and 24 are formed in the same shape, it is possible to reduce the cost of producing components in manufacturing of actuator 10.

In the present embodiment, spring retaining parts 22 and 24 also function as a shaft of the movable portion extending along the central axis of movable portion 20, and are interposed between yokes 41 and 42 and elastic supporting parts 81 and 82.

Spring retaining parts 22 and 24 include joint portions 222 and 242 and spring fixation portions 224 and 244, respectively. Joint portions 222 and 242 and spring fixation portions 224 and 244 are continuously disposed in the reciprocation direction.

Spring retaining parts 22 and 24 are tubular members and have through-hole 23 extending inside. The base end of output shaft portion 25 is inserted into through-hole 23 of spring retaining part 22 and is firmly fixed thereto.

Joint portions 222 and 242 are tubular members disposed on the axis of movable portion 20, and are joined to yokes 41 and 42, respectively. Joint portions 222 and 242 are joined by inserting one end portion sides into opening portions 412 and 422 of yokes 41 and 42, respectively. On the other hand, the other end portions of joint portions 222 and 242 are disposed to face away from each other in the opposite directions across magnet 30, and form opposite end portions of movable portion 20 which are separated from each other in the moving direction. Elastic supporting parts 81 and 82, which will be described later, are joined to the other end portions, respectively.

Spring retaining parts 22 and 24 are bonded to yokes 41 and 42 by press-fitting, but the present invention is not limited thereto, and may be bonded using a thermosetting adhesive such as an epoxy resin or an anaerobic adhesive, for example. Joint portions 222 and 242 are tubular members here, but they may be solid cylindrical bodies or rod-shaped bodies having recessed portions on the axis.

Spring fixation portion 224 is a tubular member that is provided so as to protrude from joint portion 222 to the other side (upward) of spring retaining part 22 and has an outer diameter larger than that of joint portion 222. In spring fixation portion 224, a joining surface, which is a distal end (upper end) surface thereof, is disposed around output shaft portion 25.

Output shaft portion 25 is connected to movable portion 20, moves together with movable portion 20, and outputs a motion of movable portion 20 to the outside. Output shaft portion 25 is disposed on the axis of movable portion 20, the base end side is fixed to movable portion 20 by being internally fitted to spring retaining part 22, and the other end side is exposed to the outside of actuator 10 through central opening 146 of lid portion 14.

Output shaft portion 25 is inserted through inner circumferential portion 802 which is an end portion (the other end portion) of the upper leaf spring as elastic supporting part 81 on the inner diameter side. Inner circumferential portion 802 is a central portion of the circular leaf spring and is sandwiched between spring fixation portion 224 and first spring fixation portion 26 in a state of being in contact with the joining surface of spring fixation portion 224. Spring fixation portion 224 is thus joined to elastic supporting part 81.

Output shaft portion 25 protrudes from movable portion 20 to the side of elastic supporting part 81 opposite to magnet 30 in one direction in the moving direction of movable portion 20, and is movable forward and backward outside fixed body 50. The distal end of output shaft portion 25 is connected to the back surface of the distal end of operation panel portion 450 via cap portion 300 such that the back surface is orthogonal to an extending direction of output shaft portion 25.

A user who operates operation portions 45a and 45b, each having a plurality of operation panel portions 450, directly transmits the driving of movable portion 20 through operation panel portion 450 and output shaft portion 25. Accordingly, operation input apparatus 1 can respond at a high speed and perform strong feedback in a case of performing vibration output, displacement output (the displacement of movable portion 20 in response to the operation), and detection of displacement of movable portion 20. In addition, it is possible to express an operation feeling (haptic sensation) that can cope with an operation with a long stroke.

On the other hand, spring fixation portion (lower spring fixation portion) 244 disposed on the side opposite to spring fixation portion 224 of first spring retaining part 22 across magnet 30 is joined to inner circumferential portion 802 which is an end portion of the lower leaf spring being elastic supporting part 82 on the inner diameter side.

Spring fixation portion 244 is a tubular member that is provided so as to protrude from joint portion 242 to the other side (downward) in spring retaining part 24 and has an outer diameter larger than that of joint portion 242. At spring fixation portion 244, inner circumferential portion 802 is held between the joining surface being the distal end (lower end) surface of the spring fixation portion and second spring fixation portion 28 inserted into a through-hole opened in the joining surface in a state in which inner circumferential portion 802 of the lower leaf spring serving as elastic supporting part 82 is in contact with the joining surface.

Specifically, second spring fixation portion 28 is inserted at shaft-shaped insertion portion 282 into through-hole 23 of spring connection portion 244, thereby holding inner circumferential portion 802 of elastic supporting part 82 between flange 284 disposed on the outer circumference of the base end of the insertion portion and the joining surface of spring fixation portion 244. Thus, spring fixation portion 244 and elastic supporting part 82 are joined to each other.

Second spring fixation portion 28 may be a rivet such as a blind rivet, for example. Second spring fixation portion 28 fixes shaft-shaped insertion portion 282 in the through-hole of spring fixation portion 244 by press-fitting such as caulking.

It should be noted that only by disposing spring retaining parts 22 and 24 in the movable-portion-side magnetic circuit, the upper leaf spring and the lower leaf spring as elastic supporting parts 81 and 82 can be easily assembled to movable portion 20, and the assemblability can be improved.

Note that, spring retaining parts 22 and 24 may be formed from a magnetic material, but are preferably formed from a non-magnetic material. In a case where spring retaining parts 22 and 24 are formed from a non-magnetic material, the magnetic flux from yoke 41 does not flow upward, and the magnetic flux from yoke 42 does not flow downward, and the magnetic fluxes can thus efficiently flow toward coils 61 and 62 located on the outer circumferential side of yokes 41 and 42.

<Elastic Supporting Parts 81 and 82>

Elastic supporting parts 81 and 82 are disposed on opposite sides of movable portion 20 in the moving direction, and support movable portion 20 movably in the moving direction. Elastic supporting parts 81 and 82 are leaf springs, and are disposed so as to sandwich movable portion 20 in the moving direction of movable portion 20, and are disposed on both movable portion 20 and fixed body 50 so as to intersect the moving direction.

Specifically, elastic supporting parts 81 and 82 are disposed to straddle, on one hand, the opposite end portions (upper and lower end portions) of movable portion 20 that are spaced apart from each other in the reciprocation direction and, on the other hand, the opening edge portions of fixed body 50 (coil holding part 52) that are disposed radially outward from the opposite end portions. In the present embodiment, elastic supporting parts 81 and 82 are disposed along a direction orthogonal to the reciprocation direction and face each other to sandwich movable portion 20 in the reciprocation direction.

Elastic supporting parts 81 and 82 may be non-magnetic or magnetic (specifically, ferromagnetic). Elastic supporting parts 81 and 82 may be formed from a stainless-steel plate such as SUS304, SUS316 as long as they are non-magnetic leaf springs. When elastic supporting parts 81 and 82 are formed from a magnetic material, a stainless-steel plate such as SUS301 is applicable. As a material of elastic supporting parts 81 and 82, for example, a magnetic material (for example, SUS301) is known to be more durable and less expensive than a non-magnetic material (for example, SUS304, SUS316, or the like). In the present embodiment, elastic supporting parts 81 and 82 are formed from SUS301.

Elastic supporting parts 81 and 82 support movable portion 20 such that the movable portion does not come into contact with fixed body 50 regardless of whether the movable portion is in reciprocating motion or not in reciprocating motion. Elastic supporting parts 81 and 82 may be formed from any material as long as they are configured to elastically support movable portion 20 movably.

Each of elastic supporting parts 81 and 82 is a plurality of plate-shaped spiral springs which have a flat plate shape in a normal state. In each of elastic supporting parts 81 and 82, arc-shaped deformation arm portions 804 extend radially outward at regular intervals from the outer edge portion of inner circumferential portion 802 having the annular plate shape, and are connected to outer circumferential fixation portion 806 having the annular plate shape at the end portions of deformation arm portions 804.

Inner circumferential portions 802 have a shape disposed on the joining surfaces of spring fixation portions 224 and 244 of spring retaining parts 22 and 24, and have, for example, an outer diameter substantially the same as the outer diameter of the joining surfaces of spring fixation portions 224 and 244.

Deformation arm portions 804 are elastically deformable, are joined to outer circumferential fixation portion 806 at one end, are joined to inner circumferential portion 802 at the other end, and connect outer circumferential fixation portion 806 and inner circumferential portion 802 to each other. A plurality of deformation arm portions 804 are disposed in a spiral shape between inner circumferential portion 802 and outer circumferential fixation portion 806 while being spaced from one another by a predetermined interval in the circumferential direction. Movable portion 20 may be supported by three or more elastic supporting parts (leaf springs) 81 and 82. The plurality of leaf springs are attached to extend along a direction orthogonal to the reciprocation direction.

In elastic supporting parts 81 and 82, inner circumferential portions 802 are joined respectively to the opposite end portions (spring fixation portions 224 and 244) that are separated from each other in the axial direction (reciprocation direction) of movable portion 20. Further, the outer circumferential fixation portion 806 sides of elastic supporting parts 81 and 82 are disposed so as to protrude radially outward (in the radial direction) at the opposite end portions of movable portion 20.

Outer circumferential fixation portion 806 is sandwiched between opposite opening edges of coil holding part 52 and case 12 in a state where a notch is formed in its outer circumferential edge and movable-range forming portion 54 of coil holding part 52 is engaged with the notch.

Specifically, in elastic supporting part 81, outer circumferential fixation portion 806 is sandwiched and fixed in case 12 between annular upper end surface 527a of flange portion 527 and pressing portion 148 of lid portion 14. Note that, upper end surface 527a means an upper (one-side) end surface of a portion of the upper side (one side) of upper (one-side) flange portion 527 other than movable-range forming portions 54.

Further, in lower elastic supporting part 82, outer circumferential fixation portion 806 is fixed to the lower end portion of coil holding part 52 at the outside of movable portion 20 in the radial direction in actuator 10. Specifically, outer circumferential fixation portion 806 of elastic supporting part 82 is fixed to a portion of annular lower end surface 528a of lower flange portion 528 forming the lower end portion of coil holding part 52, the portion being other than movable-range forming portions 54.

In the plurality of elastic supporting parts 81 and 82, outer circumferential fixation portion 806 being one end of each of elastic supporting parts 81 and 82 on the outer circumferential side is fixed to fixed body 50 while inner circumferential portion 802 being the other end of each of elastic supporting parts 81 and 82 on the inner circumferential side is fixed to movable portion 20 such that the directions of the whirls of elastic supporting parts 81 and 82 are the same, for example.

As described above, a plurality of whirl-shaped leaf springs are used as the plurality of elastic supporting parts 81 and 82 in the present embodiment. Elastic supporting parts 81 and 82 are attached respectively to the opposite end portions of movable portion 20 which are distant from each other in the moving direction, and elastically support movable portion 20 with respect to fixed body 50. Thus, when the movement amount of movable portion 20 is large, the movable portion moves in a translational direction (here, the direction on a plane perpendicular to the moving direction) while rotating, albeit slightly. When the whirl directions of the plurality of leaf springs are opposite each other, the plurality of leaf springs move in a buckling direction or a pulling direction to each other, whereby smooth movement is prevented.

Since actuator 10 includes a pair of elastic supporting parts 81 and 82, actuator 10 can improve linear drive properties of movable portion 20 and stably perform the driving of movable portion 20 without being affected by an impact or a disturbance from the outside. Since the stability of the linear driving can be increased in particular, both characteristics of the stability of a magnetic sensor output and the stability of an operation feeling output (a haptic sensation output) can be increased.

Elastic supporting parts 81 and 82 of the present embodiment are fixed to movable portion 20 such that the whirl directions are the same. Thus, even when the movement amount of movable portion 20 is large, elastic supporting parts 81 and 82 can move smoothly, i.e., can be deformed in the axial direction. Accordingly, elastic supporting parts 81 and 82 produce a greater amplitude and can increase a vibration output not only during movement but also during vibration.

However, depending on a desired vibration range of movable portion 20, the whirl directions of the plurality of elastic supporting parts 81 and 82 may be designed to be opposite each other.

Meanwhile, outer circumferential fixation portion 806 of upper elastic supporting part 81 is, at the outside in the radial direction, fixed to the upper end portion of coil holding part 52. Specifically, outer circumferential fixation portion 806 of elastic supporting part 81 is fixed to a portion of annular upper end surface 527a of upper flange portion 527 forming the upper end portion of coil holding part 52 (see FIG. 13), the portion being other than movable-range forming portions 54. Details of the configuration of coil holding part 52 will be described later.

In case 12, outer circumferential fixation portion 806 of elastic supporting part 82 is sandwiched and fixed by annular lower end surface 528a of flange portion 528 and step portion 138 formed on a circumferential edge portion of bottom portion 134. Note that, lower end surface 528a means a lower (other-side) end surface of a portion of the lower side (other side) of lower (other-side) flange portion 528 other than movable-range forming portions 54.

Outer circumferential fixation portions 806 are formed in an annular shape, and the outer circumferential portion of one outer circumferential fixation portion 806 is sandwiched between upper end surface 527a of coil holding part 52 (see FIG. 13) and pressing portion 148, and the outer circumferential portion of the other outer circumferential fixation portion 806 is sandwiched between lower end surface 528a of coil holding part 52 and step portion 138. With this configuration, outer circumferential fixation portions 806 are fixed to fixed body 50.

<Fixed Body 50>

As illustrated in FIG. 13, fixed body 50 holds coils 61 and 62, and supports, via elastic supporting parts 81 and 82, movable portion 20 inside coils 61 and 62 in the radial direction such that movable portion 20 is freely movable in the moving direction (the coil axial direction, or the axial direction of movable portion 20).

Fixed body 50 includes coils 61 and 62, outer yoke 70, and coil holding part 52 that holds coils 61 and 62.

Actuator 10 is configured such that substantially all the components for generating force feedback such as movable portion 20 via elastic supporting parts 81 and 82 and case 12, in addition to coils 61 and 62, are connected to coil holding part 52.

Coil holding part 52 is a tubular member, holds coils 61 and 62 disposed on the outer circumferential surface, and surrounds magnet 30 with inner circumferential surface 522a. Movable portion 20 including magnet 30 is movably disposed inside coil holding part 52. Coil holding part 52 may also be formed in a bobbin shape, and in this case, coils 61 and 62 are wound on the outer circumference of the inner tubular holding-portion main body (protective wall) of coil holding part 52.

Coil holding part 52 is a tubular member formed from a resin such as a phenolic resin or polybutylene terephthalate (PBT). In the present embodiment, coil holding part 52 is formed from a material containing a phenolic resin such as Bakelite having high flame retardancy.

When coil holding part 52 is formed from a material containing a phenolic resin, a higher flame retardancy is obtained. It is thus possible to improve the safety at the time of driving even when heat is generated by Joule heating when a current flows through coils 61 and 62 held by coil holding part 52. Moreover, the dimensional accuracy is increased and the positional accuracy of coils 61 and 62 is increased accordingly. It is thus possible to reduce variations in characteristics of movement, reciprocating motion or vibration.

Specifically, coil holding part 52 includes tubular holding-portion main body 522, middle flange portion 526 and flange portions 527 and 528 protruding in the radial direction from the outer circumference of holding-portion main body 522, terminal part 75, and movable-range forming portions 54.

Holding-portion main body 522 functions as a protective wall portion for protecting coils 61 and 62 against collision by movable portion 20 when movable portion 20 disposed inside is being driven. The thickness of holding-portion main body 522 gives sufficient strength to cause no effect on coils 61 and 62 on the outer circumferential side at all even when moving movable portion 20 comes into contact with holding-portion main body 522.

Coils 61 and 62 are disposed on the outer circumferential side of holding-portion main body 522 sequentially in the coil axial direction between middle flange portion 526 and flange portion 527 on one side and flange portion 528 on the other side (coil attachment portions 52b and 52c). Holding-portion main body 522 positions coils 61 and 62 such that the coils radially externally surround the outer circumferential surfaces of yokes 41 and 42 (the outer circumferential surfaces of magnet 30 and yokes 41 and 42) of movable portion 20.

Specifically, the outer circumferential surface of holding-portion main body 522 is partitioned by middle flange portion 526 and flange portions 527 and 528, and is provided with recessed coil attachment portions 52b and 52c that open radially outward on the outer circumferential side.

Terminal part 75 functions as a connector wiring portion to which coil windings of coils 61 and 62 are tied for connection to an external device. Coils 61 and 62 are connected to the external device via terminal part 75, and power can be supplied from the external device to coils 61 and 62.

Terminal part 75 is an electrically conductive member disposed to protrude from the outer circumferential portion of holding-portion main body 522. In the present embodiment, terminal part 75 is press-fitted to the outer circumferential surface of middle flange portion 526 disposed in the center of the moving direction on the outer circumference of holding-portion main body 522. Terminal part 75 is thus disposed to protrude from the outer circumferential surface of middle flange portion 526.

Flange portions 527 and 528 are disposed respectively on opposite end portions of holding-portion main body 522 and separate from each other in the axial direction of the holding-portion main body (which is also the moving direction and the upper-lower direction in the present embodiment), so as to form the upper and lower end portions of coil holding part 52.

Elastic supporting parts 81 and 82 are fixed to end portions of flange portions 527 and 528 on the sides away from middle flange portion 526 (upper and lower end portions in the present embodiment).

Movable-range forming portions 54 are disposed on the upper and lower end portions of coil holding part 52, and form a moving range between lid portion 14 and bottom portion 134 of case 12 and movable portion 20 when coil holding part 52 is accommodated in case 12.

Movable-range forming portions 54 are projecting side portions protruding from flange portions 527 and 528 in the reciprocation direction (upper-lower direction). Movable-range forming portions 54 are disposed at predetermined intervals on upper and lower annular end surfaces (also referred to as "upper end surface and lower end surface" or "opening end surfaces") 527a and 528a of flange portions 527 and 528. Upper end surface 527a is an opening end surface on one side, and lower end surface 528a is an opening end surface on the other side.

Flange portion 527 includes, on the opening end surface on one side, projecting movable-range forming portions 54 protruding in the moving direction. The one opening end surface functions as a top surface receiving portion that receives lid portion 14 via movable-range forming portions 54. Flange portion 528 includes, on the opening end surface on the other side, projecting movable-range forming portions 54 protruding in the moving direction. The other opening end surface functions as a bottom surface receiving portion that receives bottom portion 134 via movable-range forming portions 54.

Further, movable-range forming portions 54 are fitted into the notches formed in elastic supporting parts 81 and 82, to perform radial positioning of elastic supporting parts 81 and 82.

Movable-range forming portions 54 are fitted in the notches; accordingly, it is possible to uniformly set the attachment positions of elastic supporting parts 81 and 82 with respect to coil holding part 52 of each individual unit 15, so as to perform stable position determination of elastic supporting parts 81 and 82 with respect to coil holding part 52. Further, with respect to coil holding part 52, elastic supporting parts 81 and 82 are not fixed to the fixed body side via a plurality of components. Thus, a structure less susceptible to component tolerances is achieved, and movement in the circumferential direction and the radial direction such as rotation is restricted. It is thus possible to suppress variations in elastic supporting parts 81 and 82 as products, and to achieve stable characteristics.

Coil holding part 52 is accommodated in case 12 such that movable-range forming portions 54 at the upper and lower end surfaces are in contact with the edge portion of lid portion 14 and the edge portion of bottom portion 134, and is fixed to the edge portion of lid portion 14 and the edge portion of bottom portion 134.

<Coil>

In actuator 10, coils 61 and 62, together with magnet 30 and yokes 41 and 42, are used for generating a drive source of actuator 10, in which case the axial direction of coils 61 and 62 (magnetization direction of magnet 30) is the moving direction.

Coils 61 and 62 generate a magnetic field by energization based on a detection result of magnetic sensor 91 to move movable portion 20. Coils 61 and 62 are disposed radially outside movable portion 20. Coils 61 and 62 together with magnet 30 constitute a magnetic circuit similar to a voice coil motor.

Coils 61 and 62 are disposed on coil attachment portions 52b and 52c, and coils 61 and 62 are disposed at positions facing yokes 41 and 42 in a direction orthogonal to the reciprocation direction in the present embodiment.

Coils 61 and 62 are held by coil holding part 52 such that the center position of the length of the coils in the coil axial direction (reciprocation direction) is substantially the same position (including the same position) in the reciprocation direction as the center position of the length of movable portion 20 in the reciprocation direction (the center position of magnet 30 in the reciprocation direction). Note that coils 61 and 62 of the present embodiment are configured to be wound in directions opposite to each other, through which currents flow in the opposite directions during energization. Coils 61 and 62 are fixed by bonding or the like to recessed coil attachment portions 52b and 52c, and the outer circumferential surfaces of the coils are surrounded by outer yoke 70 inside case 12.

The end portions of coils 61 and 62 are tied and connected to terminal part 75 of middle flange portion 52θ. Coils 61 and 62 are connected to an external power supply section via terminal part 75. For example, the respective end portions of coils 61 and 62 may be connected to a direct current (DC) supply section, and direct current (DC) power may be supplied from the direct current (DC) supply section to coils 61 and 62. Thus, coils 61 and 62 can generate, between the magnet and coils 61 and 62, thrust allowing movement on one side in a direction toward each other or away from each other in their axial direction.

Further, the respective end portions of coils 61 and 62 may be connected to an alternating current (AC) supply section, and an alternating current (AC) power supply (alternating current (AC) voltage) may be supplied from the alternating current (AC) supply section to coils 61 and 62. Thus, coils 61 and 62 can generate, between the magnet and coils 61 and 62, thrust allowing movement in a direction toward each other or away from each other in their axial direction.

<Outer Yoke 70>

Outer yoke 70 is a cylindrical magnetic body that surrounds the outer circumferential surface of coil holding part 52 and is disposed at a position that covers coils 61 and 62 radially outward. Outer yoke 70 prevents leakage flux from actuator 10 to the outside in the radial direction in the magnetic circuit.

Outer yoke 70 is disposed such that the center of the length of outer yoke 70 in the reciprocation direction is located at the same height as the center of magnet 30 in the reciprocation direction that is disposed inside outer yoke 70. The shielding effect of outer yoke 70 makes it possible to reduce the leakage flux to the outside of the actuator.

Outer yoke 70 also makes it possible to increase the thrust constant so as to increase the electromagnetic conversion efficiency in the magnetic circuit. Outer yoke 70 utilizes the magnetic attraction force of magnet 30, and functions as a magnetic spring together with magnet 30. The magnetic spring makes it possible to reduce stress that would be caused when elastic supporting parts 81 and 82 are mechanical springs, so as to improve the durability of elastic supporting parts 81 and 82.

<Case 12>

Case 12 includes: bottomed cylindrical case main body 13 having circumferential wall portion 132 and bottom portion 134; and lid portion 14 for closing opening portion 135 of case main body 13. Case 12 has a columnar shape. The columnar shape is a shape having a height (thickness) allowing generation of sufficient thrust in the reciprocation direction in cooperation with coils 61 and 62 that face case 12 with their outer circumferences. For example, case 12 of the present embodiment is formed in a cylindrical shape by bottomed cylindrical case main body 13 and lid portion 14, but the shape is not limited to this and may be elliptical cylindrical or polygonal prismatic. The length of the case in the reciprocation direction may be longer or shorter than the length of the case in a direction perpendicular to the reciprocation direction. The elliptical shape of the elliptical cylindrical shape and elliptical shape in the present embodiment is mainly an ellipse including parallel straight-line-like portions, and thus means an oval shape.

Lid portion 14 and bottom portion 134 form top surface portion 142 and the lower surface portion (bottom portion 134) of actuator 10 in the present embodiment, respectively, and are disposed to face each other with a predetermined gap in the reciprocation direction of movable portion 20.

Lid portion 14 includes protruding portion 144 projecting radially outward from a part of the outer circumference of top surface portion 142 and is engaged with cutout portion 122 of case main body 13. Protruding portion 144 engages lid portion 14 with cutout portion 122 of case main body 13 to perform positioning when lid portion 14 is attached to case main body 13. Each of lid portion 14 and bottom portion 134 limits a movable range of movable portion 20. Lid portion 14 and bottom portion 134 have a function as a movable-range reducing part that is a hard stop (movable range limitation) of movable portion 20.

When lid portion 14 is attached to case main body 13, protruding portion 144 of lid portion 14 is disposed above terminal part 75 exposed in cutout portion 122 of case main body 13 to the outside at the central portion of cutout portion 122 in the longitudinal direction. Thus, the position of terminal part 75 of actuator 10 can be grasped only in plan view of lid portion 14.

Case main body 13 is provided with magnetic sensor 91 and circuit board 92.

Magnetic sensor 91 is mounted on circuit board 92, detects a change in the magnetic flux caused by the movement of magnet 30 of movable portion 20, and detects the displacement of movable portion 20.

<Magnetic Sensor 91>

Magnetic sensor 91 is an example of an operation amount detection part that detects a moving amount of movable portion 20 in the moving direction that is moved by a user operation via operation panel portion 450. Magnetic sensor 91 detects the position of movable portion 20 moving in response to a user's operation. Magnetic sensor 91 is disposed at a distance from movable portion 20 in the moving direction of movable portion 20. The moving direction of movable portion 20 may be the side opposite to the side to which movable portion 20 moves. That is, the position of magnetic sensor 91 may be the same side or a different side as long as it is in the moving direction of movable portion 20.

It is preferable that magnetic sensor 91 be disposed on a central axis extending in the reciprocation direction of movable portion 20 (a position overlapping the axis of output shaft portion 25) or in the vicinity of the central axis.

Magnetic sensor 91 together with circuit board 92 is attached to the outer surface of case main body 13, and the arrangement position of magnetic sensor 91 is on the axis of output shaft portion 25 of movable portion 20.

Since magnetic sensor 91 is disposed on the outer surface of case 12, it can be assembled outside actuator 10, and the assemblability of actuator 10 can be improved.

In addition, it is possible to easily attach or replace magnetic sensor 91 without disassembling actuator 10. Further, magnetic sensor 91 included in actuator 10 can be easily inspected.

It is preferable that magnetic sensor 91 includes a Hall element. It is preferable that a circuit configuration of the magnetic sensor at a subsequent stage be easier than, for example, in that case of simply using a Hall element, and it is also preferable that the magnetic sensor be a Hall IC which compares an output of the Hall element with a threshold value for output of High/Low. For the Hall IC, the output voltage range is defined by the power supply, and the subsequent-stage circuitry (microcontroller) can thus be easily created.

Further, as a magnetic sensor for which the output voltage range is defined by a power supply, a Hall sensor incorporating an amplifier, such as a linear Hall IC in which the output of the Hall element is amplified by the amplifier for linear output may also be used for magnetic sensor 91. Accordingly, peripheral circuitry can be easily configured at low cost without using other sensors, amplifiers, and transducers such as dedicated AD converters.

<Circuit Board (Control part) 92>

Circuit board 92 includes a microcontroller, an actuator driver, and the like mounted thereon and includes a drive control part that controls driving of the actuator. In circuit board 92, magnetic sensor 91 detects the position of movable portion 20, which is moved by a user's operation via output shaft portion 25, to detect the operation displacement of movable portion 20, and controls the movement of movable portion 20 by energizing coils 61 and 62 in accordance with the detection result. Note that the drive control part may not be provided in actuator 10. The drive control part is a control part of operation input apparatus 1 and is controlled by microcontroller 400 that controls each part of entire operation input apparatus 1.

This allows actuator 10 to detect the operation displacement and perform haptic feedback corresponding to the pressing operation. In particular, the detection of operation displacement of movable portion 20 makes it possible to perform detection specialized for the pressing operation.

As described above, actuator 10 can receive the operation displacement by output shaft portion 25 and generate the haptic feedback based on the operation displacement received by output shaft portion 25 to present it as the operation feeling of the user who operates operation panel portion 450. It is thus possible to more accurately reproduce a user operation and to feed back a haptic sensation of the operation also as an operation of a switch haptic sensation, a slider haptic sensation, or the like.

When magnetic sensor 91 is used, a magnet originally necessary for forming an actuator is used for the sensor. It is thus possible to provide an inexpensive means for detecting the position of the movable portion.

Since actuator 10 includes magnetic sensor 91 as a sensor for detecting the displacement of movable portion 20 as described above, actuator 10 can easily detect the operation and provide haptic feedback.

Since case 12 is formed from a non-magnetic material, the lower surface of the case provided with magnetic sensor 91 is also formed from a non-magnetic material. As a result, magnetic sensor 91 can detect the stable magnetic flux density in the magnetic circuit including magnet 30 and accurately detect the position of movable portion 20.

Further, the magnetization direction of magnet 30 is parallel to the moving direction of movable portion 20. Thus, magnetic sensor 91 detects the magnetic flux density of the distribution of a single magnetic pole, and thus can enhance the sensor detectability, so as to perform a stable sensor output.

In addition, movable portion 20 is accommodated inside coils 61 and 62 in a state of being drivable in the axial direction. Thus, it is possible to form a magnetic circuit capable of generating thrust more efficiently. Further, the magnetic flux density to the bottom portion 134 side is increased, thereby making the detection in magnetic sensor 91 disposed on bottom portion 134 more accurate and easier.

<Operation of Actuator 10>

FIG. 17 is a diagram for describing an operation of the actuator according to an embodiment of the present invention.

With reference to FIG. 17, a description will be given of an operation of actuator 10 in relation to one example in which magnet 30 is magnetized such that front surface 30a, which is one side of magnet 30 in the magnetization direction (upper side in the present embodiment), is the S-pole, and back surface 30b, which is the other side in the magnetization direction (lower side in the present embodiment), is the N-pole.

In actuator 10, movable portion 20 is considered to correspond to a mass in a vibration model of a spring-mass system, and when the resonance is sharp (exhibiting a sharp peak), the sharp peak can be reduced by damping the reciprocating motion, for example. Damping the vibration makes the resonance less sharp, so that the maximum amplitude value and the maximum movement amount of movable portion 20, for example, at the time of resonance do not vary, and vibrations of the suitable and stable maximum movement amount are output.

In actuator 10, flow mf of the magnetic flux is formed by the flux emitting from the back surface 30b side of magnet 30 to yoke 42, being radiated toward the coil 62 side, passing through outer yoke 70, and via coil 61, entering magnet 30 form yoke 41 on the upper side of magnet 30.

Accordingly, when energization is performed as illustrated in FIG. 17, the Lorentz force in the -f direction is generated in coils 61 and 62 by interaction between the magnetic field of magnet 30 and the currents flowing through coils 61 and 62 in accordance with Fleming's left hand rule.

The Lorentz force in the -f direction is in a direction orthogonal to the direction of the magnetic field and to the direction of the currents flowing through coils 61 and 62. Since coils 61 and 62 are fixed to fixed body 50 (coil holding part 52), in accordance with the law of action and reaction, a force opposed to the Lorentz force in -f direction is generated as thrust in the f direction in movable portion 20 including magnet 30. As a result, movable portion 20 including magnet 30 moves in the f direction, that is, toward the bottom portion 134 (bottom surface of case main body 13) side.

In contrast, when the energization direction of coils 61 and 62 is switched to the opposite direction and coils 61 and 62 are energized, the Lorentz force in a direction reverse to the f direction is generated. The generation of the Lorentz force in this f direction causes, in movable portion 20, the force opposite to the Lorentz force in this f direction as thrust (thrust in the -f direction) in accordance with the law of action and reaction, so that movable portion 20 moves in the -f direction, that is, toward the top surface side of lid portion 14 of fixed body 50.

Actuator 10 makes it possible to provide a user with a so-called haptic sensation and force sensation feedback (which may also be referred to as force feedback) via output shaft portion 25 in response to the user's operation by moving movable portion 20 toward either the lid portion 14 side or the bottom portion 134 side.

In addition, movable portion 20 can also perform a reciprocating motion or vibrate by coils 61 and 62 being supplied with a current alternately in opposite directions, and this can be used to actuate movable portion 20 through an operation of the user.

In addition, in actuator 10, a magnetic attraction force acts between magnet 30 and outer yoke 70, which functions as a magnetic spring in a non-driven (non-vibrated) state in which actuator 10 is not energized. The magnetic attraction force generated between magnet 30 and outer yoke 70 and a restoring force that brings elastic supporting parts 81 and 82 back to their original shapes cause movable portion 20 to return to its original position.

Actuator 10 includes: fixed body 50 including coils 61 and 62; and movable portion 20 including magnet 30 disposed radially inside coils 61 and 62 and magnetized in the axial direction of coils 61 and 62. In addition, actuator 10 includes flat plate elastic supporting parts 81 and 82 that elastically hold movable portion 20 such that movable portion 20 is freely movable in the moving direction that is the coil axial direction.

Further, coils 61 and 62 are disposed on the outer circumference of holding-portion main body 522 of coil holding part 52, outer circumferential surface 20a of movable portion 20 is disposed on the inner circumferential side of holding-portion main body 522 with a gap being interposed between the outer circumferential surface of the movable portion and the holding-portion main body, and the outer circumferential surfaces of coils 61 and 62 are surrounded by outer yoke 70.

Accordingly, in actuator 10, the leakage flux to the radially outer side is suppressed, and outer yoke 70 together with magnet 30, yokes 41 and 42, and coils 61 and 62 functions as a magnetic path, thereby improving generation of thrust by the magnetic force. Further, the detection of the magnetic flux density by magnetic sensor 91 on the bottom surface side is not influenced at all.

As illustrated in FIG. 17, when movable portion 20 moves to the lid portion 14 side, or the upper side (arrow "movable direction, up"), magnet 30 is away from magnetic sensor 91, and thus, the leakage flux detected by magnetic sensor 91 at a lower portion of case 12 is weak.

Further, when movable portion 20 moves to the bottom portion 134 side (arrow "movable direction, down"), magnet 30 approaches magnetic sensor 91, and thus, the leakage flux detected by magnetic sensor 91 is strong. Accordingly, magnetic sensor 91 can detect the magnetic flux density in response to the operation of movable portion 20. It is thus possible to directly apply a haptic sensation such as movement, vibration, and/or impact via output shaft portion 25 based on the detection result.

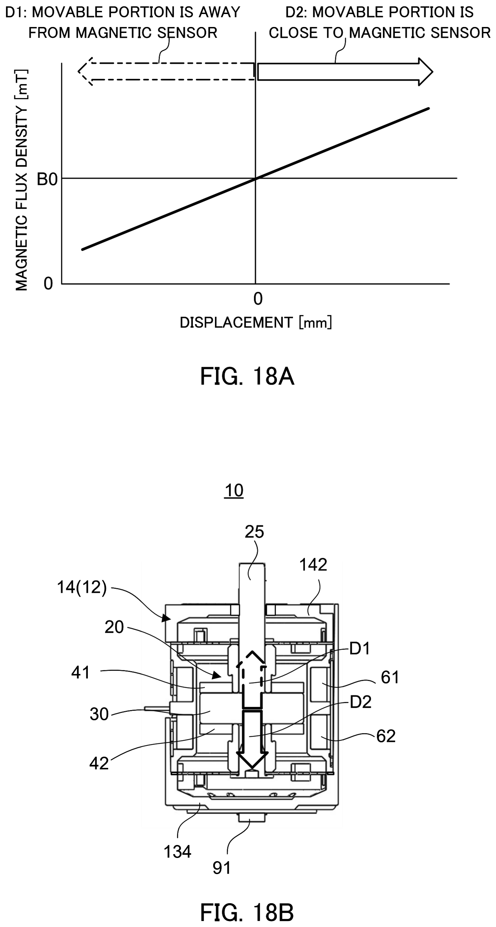

FIGS. 18A and 18B are diagrams for explaining sensing of the magnetic sensor, and FIG. 18A illustrates a relationship between the magnetic flux density detected by the magnetic sensor and the displacement of the magnet, and FIG. 18B schematically illustrates the actual operation of the movable portion corresponding to the detection of FIG. 18A.

As illustrated in FIGS. 18A and 18B, when movable portion 20 having a configuration in which magnet 30 is sandwiched between yokes 41 and 42 moves in direction D1, that is, toward lid portion 14, movable portion 20 is away from magnetic sensor 91, and the magnetic flux density decreases. In addition, when movable portion 20 moves in direction D2, that is, toward bottom portion 134, or in this case, toward magnetic sensor 91 disposed at a lower portion, the magnetic flux density to be detected increases.

As described above, magnetic sensor 91 can linearly detect the relationship between the magnetic flux density and the displacement of the movable portion, and can suitably detect the position of movable portion 20 based on the relationship.

Actuator 10 has a structure in which unit 15 is accommodated in case 12, and the outer circumferential surface of circumferential wall portion 132 of case 12 formed from a resin can be formed as a smooth surface. Thus, when actuator 10 is attached to an electronic device, it is possible to reliably and easily apply a cushioning material such as a sponge to be interposed between actuator 10 and the attachment point.

Moreover, since actuator 10 has the configuration in which unit 15 is disposed in case 12, fixation of elastic supporting parts 81 and 82, which requires high dimensional accuracy, can be achieved by attaching elastic supporting parts 81 and 82 to coil holding part 52.

Thus, arrangement of movable portion 20 including the fixation of elastic supporting parts 81 and 82 can be determined based on coil holding part 52, so that it is possible to increase the accuracy of the haptic sensation generation direction of the product. Specifically, only increasing the dimensional accuracy of coil holding part 52 formed as one component from a resin or the like makes it possible to easily dispose coils 61 and 62 and movable portion 20 (magnet 30) attached via elastic supporting parts 81 and 82 in an accurate positional relationship, for example.

Further, terminal part 75 is disposed on coil holding part 52 to protrude outward, so that tying and soldering of the coil wire of the coils are facilitated, and connection between an external device and coils 61 and 62 can be facilitated.

As described above, actuator 10 can perform haptic sensation presentation while having impact resistance.

Actuator 10 is driven by a pulse (a direct current (DC) pulse or an alternating current (AC) pulse) input to coils 61 and 62. That is, the energization direction of coils 61 and 62 may be appropriately set so that thrust in the -f direction toward top surface portion 142 of lid portion 14 or thrust in the f direction toward bottom portion 134 acts on movable portion 20, or so that these thrusts in the -f direction and the f direction alternately act on movable portion 20. As a result, movable portion 20 moves in the moving direction or in the vibration direction, and the force feedback can be performed via actuator 10 itself or output shaft portion 25.

As described above, actuator 10 can be easily manufactured at low cost, and has a detection function and a haptic feedback function that are easier to use.

<Driving Principle of Actuator 10>

The driving principle of actuator 10 will be simply described. Actuator 10 is driven, for example, by a supplied pulse based on following Equation 1 of motion and Circuit Equation 2. In the present embodiment, the driving is performed by inputting a short pulse, but the driving may be performed so as to generate any reciprocating motion and/or vibration without using the short pulse.

Movable portion 20 in actuator 10 performs reciprocating motion based on Equations 1 and 2.

[1]

$$m \frac{d^2 x(t)}{dt^2} = K_f i(t) - K_{sp} x(t) - D \frac{dx(t)}{dt} \quad \ldots \text{(Equation 1)}$$

m: Mass [kg]
x(t): Displacement [m]
$K_f$: Thrust constant [N/A]
i(t): Current [A]
$K_{sp}$: Spring constant [N/m]
D: Damping coefficient [N/(m/s)]

[2]

$$e(t) = Ri(t) + L \frac{di(t)}{dt} + K_e \frac{dx(t)}{dt} \quad \ldots \text{(Equation 2)}$$

e(t): Voltage [V]
R: Resistance [Ω]
L: Inductance [H]
$K_e$: Reverse electromotive force constant [V/(m/s)]

Mass m [kg], displacement x(t) [m], thrust constant Kf [N/A], current i(t) [A], spring constant $K_{sp}$ [N/m], damping coefficient D [N/(m/s)], and the like in actuator 10 can be appropriately changed within a range that satisfies Equation (1). Further, voltage e(t) [V], resistance R [Ω], inductance L [H], and reverse electromotive force constant $K_e$ [V/(m/s)] can be appropriately changed within a range that satisfies Equation (2).

Accordingly, actuator 10 is determined by mass m of movable portion 20 and spring constant $K_{sp}$ of metallic springs (the elastic bodies or the leaf springs in the present embodiment) as elastic supporting parts 81 and 82.

<Function of Actuator 10>

Actuator 10 configured as described above has the following functions by driving movable portion 20.

Movable portion 20 is driven to apply a vibration stimulus or a direct stimulus to the user who operates the operation panel portion, so that a haptic sensation that directly affects force perception and tactile sensation is applied.

Movable portion 20 is also driven to apply, to the user who operates operation panel portion 450, a load that compensates for or follows a load (operation displacement) applied by a pressing operation of the user performed on movable portion 20 via operation panel portion 450. Further, movable portion 20 can reduce the load applied to the user by applying a load in a direction opposite to the direction of the displacement. Accordingly, a haptic sensation such as hardness or softness of the operation portion (operation panel portion) is applied as the operation feeling to the user who operates operation panel portion 450.

By driving movable portion 20 such that presentation of a haptic sensation applied to the user performed by outputting vibration in accordance with a position where operation panel portion 450 is pressed is repeatedly performed in a stepwise manner, it is possible to apply, to the user who operates operation panel portion 450, the operation feeling of a selection function change with multi-stage haptic sensations.

Further, in a default state in which operation panel portion 450 does not protrude from surface portion 4a, it is possible to prompt an operation by operation panel portion 450. That is, the operation surface of operation input apparatus 1 is an operation surface having a design without unevenness as a hint for causing the user to operate the operation part, that is, an operation surface without a so-called signifier/affordance, and is an operation surface that is less visually recognizable. Thus, operation input apparatus 1 has flat and clean high design aesthetics when not energized. Further, operation input apparatus 1 can displace a plurality of operation panel portions 450 to be tilted as necessary via actuator 10, and can present the positions of operation portions 45a and 45b to the user and prompt the user to perform an operation.

In operation input apparatus 1 having such an operation surface, operation panel portion 450, which is the operation portion itself integrated with movable portion 20 of actuator 10, can operate to suggest the position of the operation portion or to guide the user to the position of the operation portion. Thus, the displacement of operation panel portion 450 suggests the position of operation panel portion 450, that is, the operation position.

In operation input apparatus 1, actuator 10 is disposed in a direction normal to surface portion 4a (the surface of housing 2), which is the operation surface. Since the normal direction is the operation direction, operation input apparatus 1 can present a haptic sensation to the user by displacing operation panel portion 450 that is the operation target on surface portion 4a as the operation surface.

Note that operation panel portion 450 can be easy to recognize by displacing operation panel portion 450 to be tilted during operation and causing operation panel portion 450 to protrude upward or to be recessed on surface portion 4a.

In addition, operation input apparatus 1 operates operation panel portion 450, which is the operation portion itself integrated with movable portion 20 of actuator 10, to be capable of performing an active human machine interface (HMI)-like operation for the user.

In addition, in the present embodiment, the operation portion configured to be movable in a direction protruding from the operation surface is composed of only actuator 10 without using a power transmission mechanism together with the actuator (motor).

In operation input apparatus 1, the structure is simplified and the assembly is facilitated. In addition, the operation portion can be operated by only the actuator without using a plurality of power transmission members constituting a power transmission mechanism section to drive the operation portion, so that an operation can be realized with high accuracy with respect to the operation panel portion.

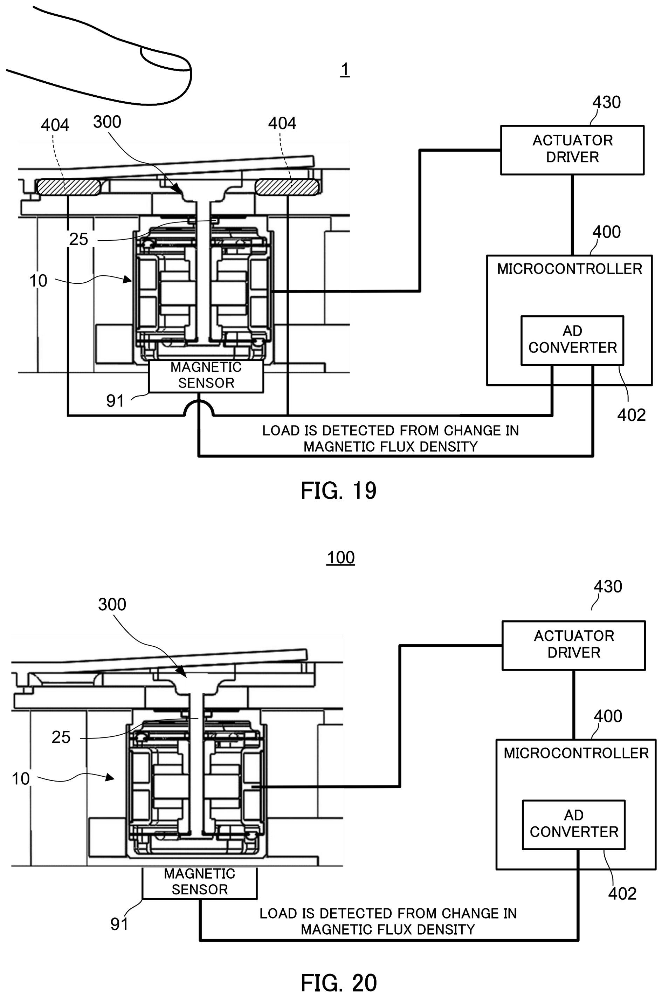

FIG. 19 is a diagram schematically illustrating a configuration of a principal part of the operation input apparatus according to an embodiment of the present invention.

Operation input apparatus 1 illustrated in FIG. 19 includes a plurality of actuators 10 and AD converter 402. In addition, operation input apparatus 1 includes microcontroller 400 as a control part that controls actuators 10, actuator driver 430, and proximity sensors 404.

As described above, magnetic sensor 91 included in actuator 10 functions for displacement detection related to the movement of movable portion 20 via operation panel portion 450, and also functions for feedback control of the position of movable portion 20.

When operation panel portion 450 is operated, an operation load is applied to actuator 10, and magnetic sensor 91 detects the operation displacement from the change in the magnetic flux density. The detected operation displacement is output to microcontroller 400, which is a control part, via AD converter 402.

Proximity sensor 404 detects the presence or absence of an object in proximity to operation panel portion 450 and outputs the detection result to microcontroller 400, which is a control part. For example, proximity sensor 404 may be a user action detection part that detects the action of the user. Further, the user may be identified from data captured by an imaging apparatus such as a camera, which is used to detect the user's action. Operation panel portion 450 may be moved to predict and suggest the next operation of the user using the identified data.

Proximity sensor 404 may be any type of sensor as long as the sensor detects approach and spacing of an object and a state of the object in a non-contact manner. For example, proximity sensor 404 may be an electromagnetic induction-type (high-frequency oscillation-type) proximity sensor, a capacitive proximity sensor, a magnetic proximity sensor, an optical time-of-flight (ToF) sensor, an ultrasonic ToF sensor, or the like.

Here, proximity sensor 404 is a capacitive sensor, detects a change in electrostatic capacity or an electrical change caused by an object approaching or moving away from operation panel portion 450, and outputs the change, as a detection result (detection value), to microcontroller 400 via AD converter 402.

Proximity sensor 404 is disposed at a position where it can detect an object approaching operation panel portion 450, for example, a finger of the user who operates operation panel portion 450.

In operation input apparatus 1, proximity sensor 404 is disposed at a position where a finger approaches during the operation of operation panel portion 450, for example, a position close to the operation target portion of operation panel portion 450 on the surface of housing 2 (surface portion 4a of upper case 4), as illustrated in FIG. 19.

In FIG. 19, the portion of operation panel portion 450 to which cap portion 300 is provided is defined as the operation target portion (the portion with the largest displacement width during movement), and proximity sensors 404 are disposed at positions that sandwich the operation target portion.

Any number of proximity sensors 404 may be disposed as long as the number corresponds to the number of operation panel portions 450. In addition, for example, a plurality of proximity sensors, each of which includes an oscillation circuit incorporating a detection electrode that generates an electric field and a detection circuit that detects a change in oscillation frequency of the oscillation circuit, may be provided at a plurality of locations.

Microcontroller (control part) 400 drives actuator 10 via actuator driver 430 based on input information. The microcontroller may incorporate edge AI, and the plurality of actuators of operation input apparatus 1 may perform various operations in accordance with input information.

Microcontroller 400 can drive actuator 10 and move operation panel portion 450 via the actuator driver based on the detection information of an object from proximity sensors 404, the position of movable portion 20 from magnetic sensor 91, the information on the displacement applied to movable portion 20, and the like.

For example, by driving actuator 10, microcontroller 400 moves operation panel portion 450 operated by the user, and presents to the user the position of operated operation panel portion 450, the operated direction, and the like.

Further, microcontroller 400 drives actuator 10 to present to the user a haptic sensation of the position of operation panel portion 450 (such as hardness or softness, for example, a prickling haptic sensation), a click feeling of multi-stage operation, the position of the operation panel portion, and the like. Note that, microcontroller 400 digitizes an analog voltage from proximity sensor 404 by an analog-to-digital conversion circuit (ADC), determines a position indicated by the information, and selects and generates a drive pattern based on the position. Microcontroller 400 outputs a command and a drive signal for driving in the selected and generated drive pattern to circuit board (control part) 92 and actuator driver 430 to operate movable portion 20.

Microcontroller 400 has a function as a game controller. Further, microcontroller 400 can also drive the actuator to perform active suggestion provision or sensitivity provision by observing, recognizing, and determining, based on information from proximity sensor 404 and magnetic sensor 91, namely, information indicating a state of the user.

Here, in operation input apparatus 1, the drive of actuator 10 based on the detection information of an object from proximity sensor 404 will be described.

For example, when the user brings a finger close to operation panel portion 450 to operate operation panel portion 450, operation panel portion 450 of actuator 10 can be in a protruding state or in a pop-up operation state. Thus, it is possible to prompt the user to operate operation panel portion 450 via operation panel portion 450.

Microcontroller 400 may have a plurality of drive patterns of actuator 10 based on the detection information from proximity sensor 404. Further, when the user operates operation panel portion 450 with the finger, microcontroller 400 may have a plurality of operation patterns for driving actuator 10 in response to the operation of operation panel portion 450 by the finger.

For example, microcontroller 400 may drive actuator 10 via actuator driver 430 to output vibration, force, or displacement for providing the user with an operation feeling via the operation portion in response to the operation.

Note that microcontroller 400 may feed back a haptic sensation corresponding to the displacement of movable portion 20 detected by magnetic sensor 91, that is, the user's operation input to actuator 10, to the user who operates operation panel portion 450 of actuator 10.

Microcontroller 400 drives actuator 10 in each operation pattern to apply vibration when the user presses or releases operation panel portion 450. Further, when operation panel portion 450 is pressed firmly, microcontroller 400 applies a further different vibration to operation panel portion 450.

FIG. 20 is a diagram schematically illustrating a configuration of a principal part of a variation of the operation input apparatus according to an embodiment of the present invention.

Operation input apparatus 100 of FIG. 20 has the configuration of operation input apparatus 1 illustrated in FIG. 19, except that proximity sensors 404 are not provided. Operation input apparatus 100 drives the operation portion in an operation pattern corresponding to the pressing operation by the user as in operation input apparatus 1, regardless of the presence or absence of the proximity sensor.

Microcontroller 400 of operation input apparatus 100 may detect, as in operation input apparatus 1, the pressing (pressing operation) of operation panel portion 450 by the user with magnetic sensor 91, and drive movable portion 20 in an operation pattern corresponding to the operation. Thus, operation input apparatus 100 applies a haptic sensation to the user as an operation feeling in response to the pressing operation.

Operation input apparatuses 1 and 100 (specifically, microcontroller 400) supply current to drive movable portion 20 in accordance with a stroke of movable portion 20 detected by magnetic sensor 91 such as a Hall sensor. Operation input apparatuses 1 and 100 may control the reaction force or the thrust for the pressing of movable portion 20 (operation panel portion 450). Since the position of the magnet of movable portion 20 can be detected using a Hall sensor (Hall element, linear Hall IC, or the like), it is possible to perform stable operation amount detection at low cost.

FIG. 21 is a diagram for describing an operation of the operation input apparatus, and illustrates an example of a display portion operated by the operation input apparatus. It is assumed that the operation input apparatus connected to the display illustrated in FIG. 21 is operated to perform a selection operation on the screen of display D. In the operation input apparatus, for example, operation panel portion 450 is configured to have a function of a direction key that determines the direction in which pointer P on the screen is moved.

When the user operates the operation panel portion of the operation input apparatus, magnetic sensors (Hall sensors) 91 of a plurality of actuators 10, each corresponding to one of a plurality of operation panel portions 450, detect the positions of the magnets in movable portions 20 of actuators 10 and sum the detected positions. Thus, the operation input apparatus can cause the user to perform an operation by applying a haptic sensation to the user with a speed variation corresponding to cursor-like input or a pressing amount of the operation panel portion, while using pointer P or an icon on the display screen.

(Operation Patterns of Actuator 10)

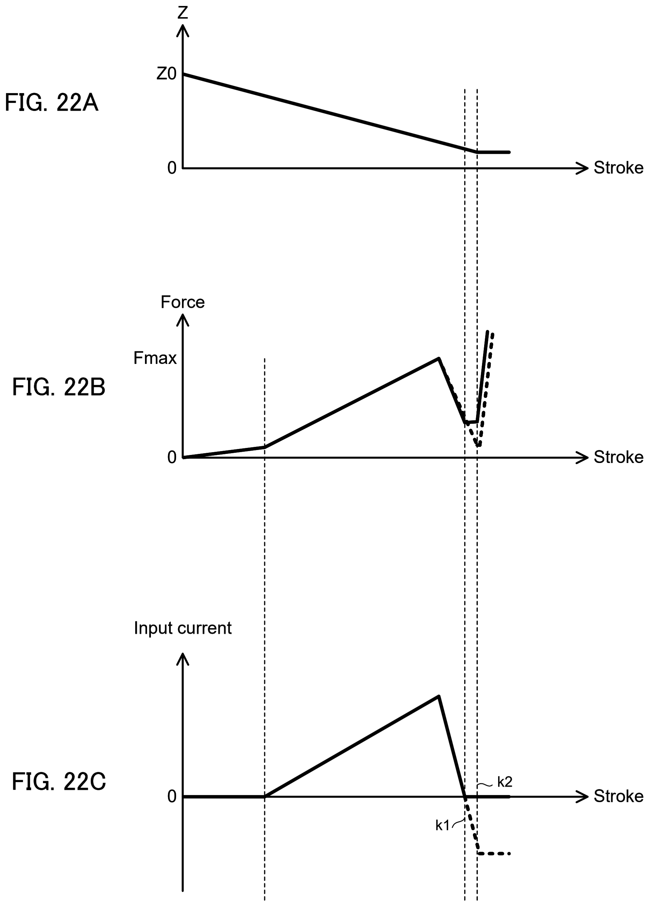

FIGS. 22 A to 22C are diagrams illustrating an example of operation patterns of the actuator, specifically, an outline of a haptic sensation expressed by an operation of the actuator when the operation panel portion is operated by the user. FIG. 22A illustrates a stroke of movable portion 20 corresponding to a pressing amount of a button returning from top position 20 to initial position 0. FIG. 22B illustrates a relationship between a stroke ("Stroke") corresponding to the pressing amount as an operation pattern of the actuator corresponding to the pressing amount of FIG. 22A and force (here, a reaction force: "Force") generated in accordance with the stroke. FIG. 22C illustrates a relationship between the stroke and the input current corresponding to the reaction force illustrated in FIG. 22B.

FIGS. 22A to 22C illustrate two operation patterns in which the heights of the input currents are different between lengths of strokes (Stroke) k1 and k2, and the pattern indicated by a broken line expresses a deeper haptic sensation than the pattern indicated by a solid line and expresses a click sensation for a low click rate. Note that, the click rate is an indicator for expressing buckling of a switch, is calculated using a point at which buckling is caused by pressing the switch and a reaction force value at which the reaction force is a minimum value when the switch is further pressed, and indicates a degree of force applied to the user during buckling.

As illustrated in FIGS. 22A to 22C, actuator 10 varies a bias current (input current) supplied to the coil in accordance with the pressing amount (operation amount) of movable portion 20 by the user pressing operation panel portion 450.

Actuator 10 applies a reaction force to movable portion 20 or adds thrust to movable portion 20 in response to the pressing amount of movable portion 20 by means of, for example, the bias current to be supplied. In addition, actuator 10 controls the driving of movable portion 20 by decreasing the bias current to be supplied or causing the bias current to flow in an opposite direction at a stage where the bias current exceeds a threshold. That is, actuator 10 can set the bias current variably in accordance with the operation amount of operation panel portion 450 and can vary the operation feeling in operating operation panel portion 450 to suit the user's preference.

As described above, the bias current is varied in actuator 10 in accordance with the operation amount by the user. Thus, actuator 10 performs the actuation of movable portion 20 to apply a reaction force to the movable portion and can express a buckling haptic sensation as the operation feeling to the user by means of a current that decreases or flows in the opposite direction at a stage where the current exceeds the threshold. In this way, operation input apparatus 1 can vary the current supplied to coils 61 and 62 to change the expression of the hardness or softness of the operation feeling, the buckling haptic sensation, and the like, thereby providing a more excellent operation haptic sensation.

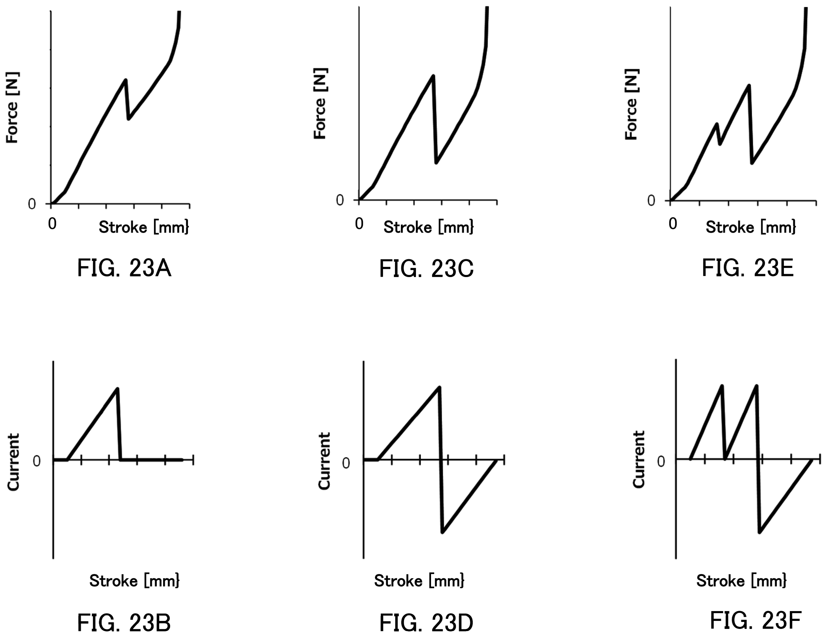

FIGS. 23A to 23F are diagrams illustrating an example of operation patterns, specifically, an example of a waveform for describing a case of expressing a switch in operation control of the actuator. Note that FIGS. 23A, 23C, and 23E each illustrate a relationship between a stroke ("Stroke") of the pressed movable portion 20 and a force ("Force") corresponding to the stroke, so-called, an "F-S curve", with the vertical axis corresponding to a load and the horizontal axis corresponding to a movement amount. The F-S curve indicates an operation force, a reaction force, a click rate, and the like of the operation panel portion (movable portion) that determine a haptic sensation of the switch. In addition, FIGS. 23B, 23D, and 23F each illustrate a relationship between the stroke of pressed movable portion 20 and a haptic sensation (specifically, an input current in a case of applying a reaction force ("Force") in an upward direction, that is, in a case of force feedback (FFB)). Note that the click rate can be interpreted as a proportion between an actuation force acting on a pressing finger and a force of pressing.

FIGS. 23A and 23B illustrate a relationship between a force (reaction force or thrust: "Force [N]"), a pressing amount ("Stroke [mm]"), and an input current ("Current") in a case of expressing a switch having a low click rate. FIGS. 23C and 23D illustrate a relationship between a force (reaction force or thrust: "Force [N]") and a pressing amount ("Stroke [mm]"), and a relationship between an input current ("Current") and the pressing amount in a case of expressing a switch having a high click rate. FIGS. 23E and 23F illustrate a relationship between thrust and a pressing amount, and a relationship between an input current and the pressing amount in a case of expressing a two-stage click. In a case of expressing a low click rate in the switch expression in this way, actuator 10 is controlled such that the depth of pressing is provided more as a haptic sensation, as compared to a case of expressing a high click rate.

In FIGS. 23E and 23F, the increased reaction force is decreased by decreasing the + current or turning OFF the + current at predetermined two points of the stroke and causing the - current to flow to increase the thrust. Then, a reaction force is applied at a predetermined pressing point instead of the increased thrust, and the haptic sensations are applied twice to enable the haptic sensation of the two-stage switch to be applied. Although the haptic sensations are applied at two stages here, a multi-stage switch expression can be realized by controlling movable portion 20 to be pressed to generate a reaction force and thrust at a plurality of set points and configuring movable portion 20 to apply a haptic sensation of three or more stages.

In this way, actuator 10 actuates movable portion 20 in multiple stages in the moving direction in accordance with the operation amount of movable portion 20 due to the operation by the user, so as to apply an operation feeling to the user.

In each switch expression of FIGS. 23A to 23F, when movable portion 20 to be pressed reaches a predetermined stroke (set value), the current is turned OFF or a reaction force (force "AGAINST") is generated, so that a click sensation and a switch-like tactile sensation can be appropriately generated.

As illustrated in FIGS. 22A to 23F, operation input apparatus 1 (specifically, microcontroller 400) drives actuator 10 to express a switch that generates vibration feedback or force feedback.

(Variation 1)

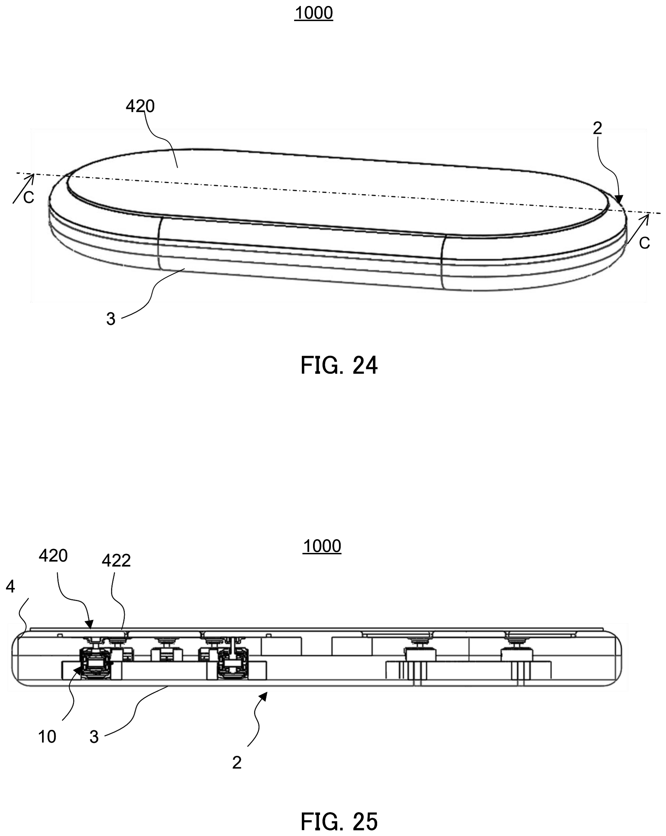

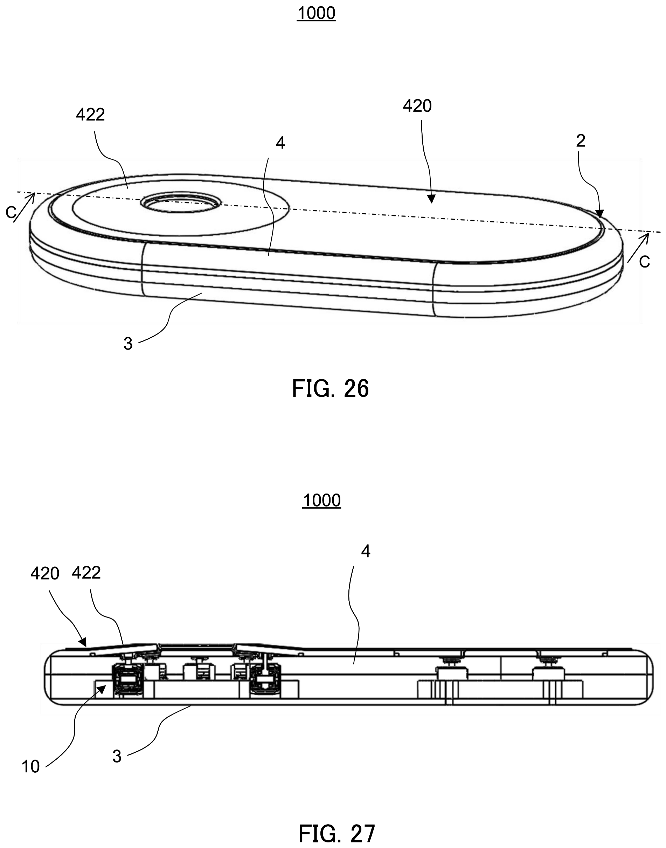

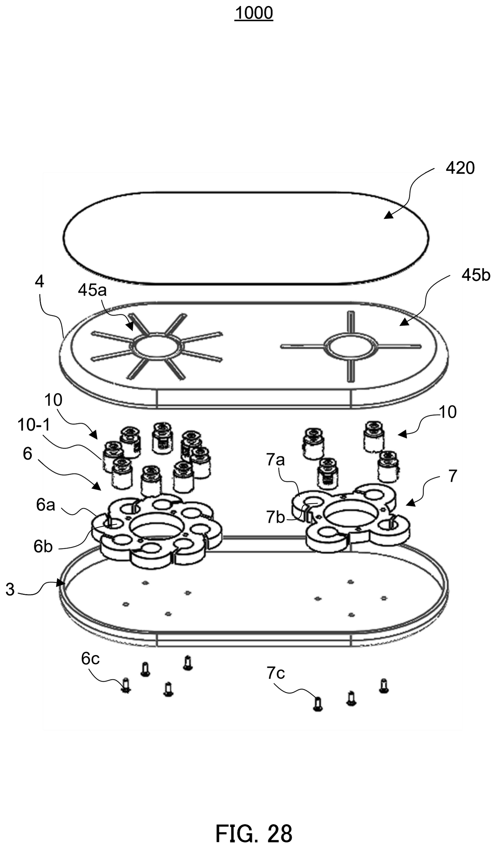

FIG. 24 is an external perspective view of Variation 1 of the operation input apparatus according to an embodiment of the present invention, and FIG. 25 is a sectional view taken along line C-C in FIG. 24. In addition, FIG. 26 is an external perspective view of the operation input apparatus of Variation 1 in which the operation panel portion is displaced, and FIG. 27 is a partial sectional view taken along line C-C in FIG. 26. FIG. 28 is an exploded perspective view of Variation 1 of the operation input apparatus.

In operation input apparatus 1 illustrated in FIG. 1, surface portion 4a of housing 2 may be made seamless to ensure higher design aesthetics.

As in operation input apparatus 1000 of Variation 1 illustrated in FIGS. 24 and 25, operation input apparatus 1 may be configured to have surface portion 4a provided with elastic surface portion (surface cover) 420 made of a soft planer material having flexibility and elastically deformable.

The soft material constituting elastic surface portion 420 is, for example, rubber, an elastomer, a sponge-like material, a cloth material, or the like.

Operation input apparatus 1000 is in a state in which groove portion 456 and the like that partition a plurality of operation panel portions 450 constituting operation portions 45a and 45b are covered and hidden by elastic surface portion 420.

Thus, the surface portion of housing 2 becomes completely seamless, resulting in operation input apparatus 1000 with higher design aesthetics.

Note that, even in a case of driving, as illustrated in FIGS. 26 and 27, actuator 10 corresponding to operation panel portion 450 operated by the user is driven based on the input information. By the driving, operation input apparatus 1000 pushes up or lowers operation panel portion 450, which has been operated by the user.

In a case where operation input apparatus 1000 raises or lowers operation panel portion 450, elastic surface portion 420 follows the operation of operation panel portion 450 by being pressed or lowered since it is made of the soft material.

When operation panel portion 450 is pushed up or down from below by actuator 10 or both operations are performed, elastic surface portion 420 is also deformed, and the operation position can be visually recognized. As described above, operation input apparatus 1000 is designed to enhance operability while having high design aesthetics.

The embodiment of the present invention has been described above. The above description is an illustration of the preferred embodiment of the present invention, and the scope of the present invention is not limited to the description. That is, the configuration of the device and the shape of each part are merely an example, and it is obvious that various variations and additions to these examples are possible within the scope of the present invention.

Industrial Applicability

The operation input apparatus according to the present invention can achieve high design aesthetics and a thin profile, and is useful as a game controller, a haptic presentation apparatus, and a vibration presentation apparatus.

Reference Signs List

1, 1A, 100, 1000 Operation input apparatus
2 Housing
3 Lower case
3a Through-hole
4 Upper case
4a Surface portion
4b Circumferential wall portion
6, 7 Holder
6a, 7a Main body portion
6b, 7b Actuator fixing hole
9 Sliding member (moving member)
10 Actuator
12 Case
13 Case main body
14 Lid portion
15 Unit
20 Movable portion
20a Outer circumferential surface
22, 24 Spring retaining part
23 Through-hole
25 Output shaft portion
26 First spring fixation portion
28 Second spring fixation portion
30 Magnet
30a Front surface
30b Back surface
41, 42 Yoke
45a, 45b Operation portion
50 Fixed body (fixed portion)
52 Coil holding part
52b, 52c Recessed coil attachment portion
54 Movable-range forming portion
61, 62 Coil
70 Outer yoke
75 Terminal part
81, 82 Elastic supporting part
91 Magnetic sensor (operation amount detection part)
92 Circuit board
100, 1000 Operation input apparatus
122 Cutout portion
132 Circumferential wall portion
134 Bottom portion
135 Opening portion
138 Step portion
142 Top surface portion
144 Protruding portion
146 Central opening
148 Pressing portion
222, 242 Joint portion
224, 244 Spring fixation portion
282 Insertion portion
284 Flange
300 Cap portion (connecting portion)
310 Opening portion
320 Accommodation portion
330 Attachment portion
400 Microcontroller (control part)
402 AD converter

403 Placement region
404 Proximity sensor
412, 422 Opening portion
415 Rib
420 Elastic surface portion
450, 450-1, 450-2 Operation panel portion
452 Central panel portion
454 Notch portion
456 Groove portion
430 Actuator driver
522 Holding portion main body (protective wall portion, cylindrical body)
522a Inner circumferential surface
526 Middle flange portion
527, 528 Flange portion
527a, 528a End surface
802 Inner circumferential portion
804 Deformation arm portion
806 Outer circumferential fixation portion
900 Elastic member
902 Ring

**Claims**

1. An operation input apparatus (1) comprising:

   a plurality of operation panel portions (450) disposed to be flush with each other, each of the plurality of operation panel portions (450) being displaceable by an operation of a user; and
   an actuator (10) including a movable portion (20) connected to the operation panel portion (450), the actuator performing, by electromagnetic driving, a first operation of the movable portion (20) to apply an operation feeling to the user in accordance with a displacement of the operation panel portion (450) and a second operation of the movable portion (20) to present an operation position of the operation panel portion (450) to the user or to prompt the user to operate the operation panel portion (450).

2. The operation input apparatus (1) according to claim 1, wherein,

   the plurality of operation panel portions (450) are each constituted by a plate-shaped body that is supported in a cantilever manner with a groove portion (456) at a base end and a distal end as a free end, as a part of an operation surface (4a) to be operated by the user, and
   the movable portion (20) is connected to a back surface of the plate-shaped body on a side of the free end and moves along with a tilt of the free end.

3. The operation input apparatus (1) according to claim 1, further comprising a connecting portion (300) that connects the operation panel portion (450) and the movable portion (20) each other, wherein,
   the movable portion (20) includes:

   an output shaft portion (25) that is disposed to be capable of linearly advancing and retreating toward a back surface of the operation panel portion(450); and
   a moving member (9) that is provided at a distal end of the output shaft portion (25), is connected to the back surface of the operation panel portion (450) via the connecting portion (300), and moves along the back surface of the operation panel portion (450) during a displacement of the operation panel portion (450).

4. The operation input apparatus according to claim 3, wherein,

   the moving member (9) is movably accommodated in an accommodation portion (320) provided in the connecting portion (300),
   the accommodation portion (320) is provided therein with an elastic member (900) that is contractible by elastically deforming to cover the moving member (9), and

the moving member (9) moves by deforming the elastic member (900) in accordance with the displacement of the operation panel portion (450), and advances and retreats the output shaft portion (25).

5. The operation input apparatus (1) according to claim 3, wherein,

the moving member (9) slides on the back surface of the operation panel portion (450), and
the output shaft portion (25) linearly advances and retreats following the displacement of the operation panel portion (450).

6. The operation input apparatus (1) according to claim 3, wherein,

at least one of the moving member (9) and the back surface of the operation panel portion (450) is constituted of an elastically deformable elastic resin, and
the moving member (9) moves and the output shaft portion (25) linearly advances and retreats, following the displacement of the operation panel portion (450).

7. The operation input apparatus (1000) according to claim 1, wherein,

the plurality of operation panel portions (450) are provided thereon with a deformable planar elastic surface portion (420), and
the plurality of operation panel portions (450) are capable of freely pushing the elastic surface portion (420) upward or downward by at least one of the first operation and/or the second operation of the movable portion (20).

8. The operation input apparatus (1) according to claim 1, wherein the actuator (10) moves the movable portion (20) in a direction normal to a surface of the operation panel portion (450).

9. The operation input apparatus (1) according to claim 1, wherein the actuator (10) includes an operation amount detection part (91) that performs detection of a movement amount, in a moving direction, of the movable portion (20) moved by the operation of the user via the operation panel portion (450).

10. The operation input apparatus according to claim 9, wherein,

the movable portion (20) includes a magnet (30) that is electromagnetically driven in cooperation with a coil (61,62) of a fixed portion (50), and
the operation amount detection part (91) is a magnetic sensor that detects a position of the magnet (30).

11. The operation input apparatus (1) according to claim 9, wherein the movable portion (20) performs an operation in accordance with a result of the detection by the operation amount detection part (91).

12. The operation input apparatus (1) according to claim 1, wherein the actuator (10) operates the movable portion (20) in multiple stages in a moving direction in accordance with an operation amount of the movable portion by the operation of the user to apply the operation feeling to the user.

13. The operation input apparatus (1) according to claim 9, wherein the movable portion (20) performs an operation of a click feeling in accordance with a result of the detection by the operation amount detection part (91).

14. The operation input apparatus according to claim 1, further comprising an action detection part (404) that detects an action of the user, wherein,
the actuator (10) performs the second operation of the movable portion to present the operation position of the operation panel portion (450) to the user or to prompt the user to operate the operation panel portion, in accordance with the action of the user detected by the action detection part (404).

15. The operation input apparatus (1) according to claim 1, wherein the actuator (10) performs at least one of the first operation and/or the second operation of the movable portion (20) by supplying a current that is variable in accordance with an operation amount of the user to provide the user with the operation feeling by changing hardness or softness of a haptic sensation.

16. The operation input apparatus according to claim 1, wherein the actuator performs at least one of the first operation and/or the second operation of the movable portion (20) by supplying a current that is variable in accordance with an operation amount of the user to apply a reaction force to the movable portion (20) and express a buckling haptic sensation to the user as the operation feeling by a current that decreases or flows in a reverse direction when a threshold is exceeded.

FIG. 1

FIG. 2

1

FIG. 3

1

FIG. 4

10

FIG. 5

FIG. 6

320    450-1(450)    9

302

300

310    25

450a

**FIG. 7A**

450-1(450)

320    9

302

300    25    310

450a

**FIG. 7B**

FIG. 8

FIG. 9

1A

450-1    45a

902    900

320

300

310

10    25

MOVABLE RANGE OF OUTPUT SHAFT PORTION

FIG. 10

FIG. 11

10

FIG. 12

FIG. 13

10

FIG. 14

10

FIG. 15

**FIG. 16**

FIG. 17

D1: MOVABLE PORTION IS AWAY
FROM MAGNETIC SENSOR

D2: MOVABLE PORTION IS
CLOSE TO MAGNETIC SENSOR

MAGNETIC FLUX DENSITY [mT]

B0

0

0

DISPLACEMENT [mm]

## FIG. 18A

10

25

142

14(12)

20

41

30

42

D1

61

D2

62

134

91

## FIG. 18B

EP 4 736 971 A1

404  300        404

25

10

MAGNETIC
SENSOR

91

LOAD IS DETECTED FROM CHANGE IN
MAGNETIC FLUX DENSITY

430

ACTUATOR
DRIVER

400

MICROCONTROLLER

AD
CONVERTER

402

FIG. 19

100

300

25

10

MAGNETIC
SENSOR

91

LOAD IS DETECTED FROM CHANGE IN
MAGNETIC FLUX DENSITY

430

ACTUATOR
DRIVER

400

MICROCONTROLLER

AD
CONVERTER

402

FIG. 20

42

FIG. 21

FIG. 22A

Z

Z0

0                                    Stroke

FIG. 22B

Force

Fmax

0                                    Stroke

FIG. 22C

Input current

0                          k2      Stroke

k1

44

FIG. 23A

FIG. 23B

FIG. 23C

FIG. 23D

FIG. 23E

FIG. 23F

1000

FIG. 24

1000

FIG. 25

1000

FIG. 26

1000

FIG. 27

FIG. 28

Europäisches
Patentamt
European
Patent Office
Office européen
des brevets

# EUROPEAN SEARCH REPORT

**Application Number**

EP 25 21 1942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/162358 A1 (MINEBEA MITSUMI INC [JP]; TAKAHASHI YUKI ET AL.) 8 August 2024 (2024-08-08) | 1,8-16 | INV. A63F13/24 A63F13/285 |
| Y | * paragraph [0014] - paragraph [0015] * * paragraph [0018] * * paragraph [0024] * * paragraph [0032] * * paragraph [0077] * * paragraph [0086] * * paragraph [0166] * * paragraph [0204] * ----- | 2-7 | G06F3/01 |
| Y | US 2015/029047 A1 (LEVASSEUR LUC [CA] ET AL) 29 January 2015 (2015-01-29) * paragraph [0077] * * paragraph [0086] * * paragraph [0111] * ----- | 2-7 | |
| A | US 2024/269548 A1 (WHITCOMB SEAN [US]) 15 August 2024 (2024-08-15) * paragraph [0045] * ----- | 1-16 | |
| A | US 2009/002140 A1 (HIGA GEORGE [US]) 1 January 2009 (2009-01-01) * paragraph [0017] * * paragraph [0019] * ----- | 1-16 | **TECHNICAL FIELDS SEARCHED (IPC)** A63F G06F |
| A | US 2024/091635 A1 (SU FONG-CHIN [TW] ET AL) 21 March 2024 (2024-03-21) * figures 3,4 * ----- | 1-16 | |

The present search report has been drawn up for all claims

| Place of search | Date of completion of the search | Examiner |
|---|---|---|
| The Hague | 27 February 2026 | Sindic, Gilles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 1942

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2026

| Patent document cited in search report | Publication date | Patent family member(s) | Publication date |
|---|---|---|---|
| WO 2024162358 A1 | 08-08-2024 | CN 120604196 A | 05-09-2025 |
| | | JP WO2024162358 A1 | 08-08-2024 |
| | | WO 2024162358 A1 | 08-08-2024 |
| US 2015029047 A1 | 29-01-2015 | US 2015029047 A1 | 29-01-2015 |
| | | WO 2013086602 A1 | 20-06-2013 |
| US 2024269548 A1 | 15-08-2024 | CN 120603630 A | 05-09-2025 |
| | | EP 4665467 A1 | 24-12-2025 |
| | | JP 2026504310 A | 04-02-2026 |
| | | US 2024269548 A1 | 15-08-2024 |
| | | WO 2024173378 A1 | 22-08-2024 |
| US 2009002140 A1 | 01-01-2009 | US 2009002140 A1 | 01-01-2009 |
| | | US 2011175838 A1 | 21-07-2011 |
| US 2024091635 A1 | 21-03-2024 | CN 117732017 A | 22-03-2024 |
| | | EP 4342551 A2 | 27-03-2024 |
| | | US 2024091635 A1 | 21-03-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 5379250 B